(19) Europäisches Patentamt / European Patent Office / Office européen des brevets

(11) **EP 2 445 981 B1**

(12) **EUROPÄISCHE PATENTSCHRIFT**

(45) Veröffentlichungstag und Bekanntmachung des Hinweises auf die Patenterteilung:
**10.07.2013   Patentblatt 2013/28**

(21) Anmeldenummer: **11701079.3**

(22) Anmeldetag: **20.01.2011**

(51) Int Cl.:
*C09J 5/00* *(2006.01)*      *C09J 133/00* *(2006.01)*

(86) Internationale Anmeldenummer:
**PCT/EP2011/050764**

(87) Internationale Veröffentlichungsnummer:
**WO 2011/092108 (04.08.2011 Gazette 2011/31)**

(54) **SEBUM-BESTÄNDIGE POLYACRYLATHAFTKLEBEBÄNDER FÜR FENSTERVERKLEBUNGEN IN MOBILFUNKTELEFONEN**

SEBUM RESISTANT POLYACRYLATE ADHESIVE TAPES FOR ADHESING WINDOWS IN MOBILE PHONES

RUBANS ADHESIFS DE POLYACRYLATE RESISTANTS AU SÉBUM POUR COLLER DES FENÊTRES DES  TÉLÉPHONES  MOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2010   DE 102010001386**

(43) Veröffentlichungstag der Anmeldung:
**02.05.2012   Patentblatt 2012/18**

(73) Patentinhaber: **Tesa SE**
**20253 Hamburg (DE)**

(72) Erfinder: **HUSEMANN, Marc, Dr.**
**22559 Hamburg (DE)**

(56) Entgegenhaltungen:
**DE-A1- 10 358 264**

**Beschreibung**

Die Erfindung betrifft die Verwendung einer Polyacrylatklebefolie zur Verklebung von Bauteilen oder Substraten im Bereich der Elektronik-Konsumgüterartikel, insbesondere die Verklebung von Displays, Glas und Kunststofffenstern in Mobilfunktelefonen.

Elektronische Geräte weisen üblicherweise einen Anzeigebereich (Display-Bereich) auf, in dem mittels einer optischen Datenanzeige Informationen übergeben werden. Üblicherweise befindet sich hinter einem Gehäusefenster, das als Rahmen ausgestattet sein kann oder in dem ein Rahmen vorgesehen sein kann, ein eigentliches Display, das häufig in Form einer Flüssigkristall-Datenanzeige (LCD), einer Leuchtdiodeneinheit (LED) oder einer organischen Leuchtdiodeneinheit (OLED) ausgestaltet ist.

In einer Vielzahl der Fälle ist das eigentliche Display ist hinter dem Gehäusefenster mittels geeignet konfektionierter Klebefolienzuschnitte (Etiketten) verklebt.

Zum Schutz des Displaybereiches werden auf der nach außen gerichteten Seite des Gehäusefensters sehr häufig transparente Schutzscheiben (zum Beispiel Kunststoff- oder Glasfenster) eingesetzt. Übliche Materialien für transparente Schutzfenster sind neben Glas zum Beispiel Polymethylmethacrylat oder Polycarbonat. Eine Basisfunktion des Fensters ist z.B. die hohe Transparenz, damit das Bild aus der bildgebenden Einheit (Display) möglichst unverfälscht und ohne Lichtintensitätsverluste an den Betrachter weitergegeben wird. Die Fenster können aber auch noch Zusatzfunktionen aufweisen. So werden z.B. häufig Antikratzlacke aufgetragen, damit bei häufiger Nutzung das Fenster nicht verkratzt. Andere Sonderfunktionen umfassen z.B. Spiegelfunktionen, die z.B. durch Metallisierung des Fensters erreicht werden können. Solche elektronischen Geräte (beispielweise Mobilfunktelefone) können zum Beispiel als Ersatz für kosmetische Spiegel genutzt werden. Neben diesen Zusatzfunktionen besteht der Trend, dass die verwendeten LCD und OLED Displays immer größer werden und die elektronischen Geräte immer flacher, insbesondere damit ein bequemeres Beisichführen des Gerätes ermöglicht wird. Daraus resultieren immer größere Fenster, aber auch immer kleinere Stegbreiten zur Verklebung. Zudem steigt ebenfalls die Anforderung an die Verklebungsqualität. So weisen derartige Fenster zunehmend ebenfalls eine Touch-Panel-Funktion auf, also die Funktion einer berührungssensitiven Fensteroberfläche, über die das elektronische Gerät, beispielsweise ein Mobilfunktelefon, bedient werden kann, insbesondere ohne dass zusätzliche Tastaturen notwendig sind. Weiterhin wird durch die Vielzahl der Funktionen erweiterter oder neuer elektronischer Geräte die Nutzung immer intensiver. Mit dieser Nutzung sind auch besondere Beanspruchungen verbunden. So stieg in den letzten Jahren die Reklamationsquote beispielsweise für Mobilfunktelefone drastisch an. Ein häufiger Reklamationsfall sind Verformungen des Haftklebebandstanzlinges im Fensterbereich, der im Laufe der Zeit in den sichtbaren Bereich verschoben wird. Untersuchungen haben ergeben, dass diese Verformungen durch Sebum verursacht werden, d.h. Ausscheidungen aus der menschlichen Haut, die als Weichmacher für das Haftklebeband fungieren, so das Haftklebeband aufquellen lassen und die Adhäsion verringern.

Im Allgemeinen ist Sebum ein Hautoberflächenfett, das zum geringeren Teil aus dem Hornfett, einem Nebenprodukt der Keratinisierung, besteht und aus den Talgdrüsen stammt. Die durchschnittliche Zusammensetzung des Sebums besteht aus: Triglyceride (19,5 - 49,4 % Massengehalt), Wachsester (22,6 - 29,5 % Massengehalt), Fettsäuren (7,9 - 39,0 % Massengehalt), Squalen (10,1 - 13,9 % Massengehalt), Diglyceride (1 ,3 - 4,3 % Massengehalt), Cholesterinester (1 ,5 - 2,6 % Massengehalt), Cholesterin (1 ,2 - 2,3 % Massengehalt).
Zu dieser Zusammensetzung können noch Proteine kommen.

Sebumausscheidungen oder auch Talgausscheidungen sind von Mensch zu Mensch etwas unterschiedlich. Sie werden durch Talgdrüsen im menschlichen Körper ausgesondert. Talgdrüsen kommen fast am ganzen Körper vor. Die aktivsten und größten findet man im Gesicht und am Oberkörper. Daher sind z.B. Mobilfunktelefone besonders starkem Sebum-Kontakt ausgesetzt. Talg wird von Sebozyten (Talgzellen) innerhalb der Zelle (intrazellulär) gebildet und durch Platzen der Zellen an die Hautoberfläche abgegeben.

Neben den sichtbaren Verschiebungen des Klebebandes kann es zu Eintrübungen und verminderter Erkennbarkeit des Displays kommen, da zum Beispiel Feuchtigkeit in den Fensterbereich eindringen und Niederschlag durch Kondensation hervorrufen kann.
Aus dieser Tatsache resultiert der Bedarf für eine Klebefolie, insbesondere eine Haftklebefolie, welche diesen Nachteil nicht aufweist.

Die EP 1 978 069 A beschreibt ein Verfahren, mittels dessen Haftklebemassen und viskoelastische Trägerschichten für Haftklebebänder auch dann homogen vernetzt werden können, wenn sehr dicke Schichten hergestellt werden sollen. Hiermit wird sich gegenüber den üblichen, dünn-homogen vernetzten Systemen abgegrenzt. Vorteile dünner Systeme nach dem Verfahren gemäß der EP 1 978 069 A gegenüber dünner Systeme, die nach Verfahren gemäß des Standes der Technik hergestellt werden, sind in dieser Schrift nicht explizit herausgestellt. Ein besonderer Vorteil der Klebebänder der EP 1 978 069 A, besonders wenn diese als doppelseitig klebrige Systeme ausgestellt sind, für dünne Systeme lässt sich daher insbesondere im Sinne der Aufgabe der hier vorliegenden, nachfolgend beschriebenen Erfindung nicht ableiten.

Aufgabe der vorliegenden Erfindung ist es, Klebefolien zur Verklebung von Bauteilen und Substraten in elektronischen Konsumartikeln wie Mobiltelefonen und dergleichen anzubieten. Aufgabe ist es insbesondere, dünne Klebebänder hierfür vorzuschlagen, die gegen äußere Einflüsse eine hohe Beständigkeit aufweisen. Insbesondere sollten die erfindungsgemäßen Klebebänder gegen den Einfluss von Schweiß, Tränen und dergleichen beständig sein.

Erfindungsgemäß konnte gefunden werden, dass Polyacrylat-Haftklebemassen, die aus der Schmelze verarbeitbar und thermisch (chemisch) vernetzbar sind, wie sie beispielsweise in der EP 1 978 069 A beschrieben sind, die erfindungsgemäße Aufgabe hervorragend erfüllen, insbesondere in Form einer Klebefolie, wie sie im Rahmen dieser Schrift näher beschrieben wird.

Die Erfindung betrifft daher die Verwendung einer Haftklebemasse zur Verklebung von Substraten in elektronischen Konsumgüterartikeln. Die Haftklebemasse ist dabei eine solche, die erhältlich ist durch Ausformung zumindest einer haftklebrigen Schicht aus einer Poyacrylat-Schmelze, die zumindest eine epoxidgruppenhaltige Substanz als Vernetzer und zumindest eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger enthält.

Die Ausformung der Polyacrylatschmelze erfolgt insbesondere als Ausformung zu einer Schicht.

Die zu vernetzenden Polyacrylate enthalten funktionelle Gruppen, die geeignet sind, mit Epoxidgruppen Verknüpfungsreaktionen - insbesondere im Sinne von Additions- oder Substitutionsreaktionen - einzugehen.

Bei der erfindungsgemäßen Verwendung wird eine doppelseitig klebrige Klebefolie bereitgestellt, die zumindest eine derartige haftklebrige Schicht umfasst, eine chemischen Vernetzungsreaktion der Haftklebemasse unterhalb der Schmelztemperatur des zu vernetzenden Polyacrylats durchgeführt und mittels der Klebefolie mit der zumindest teilweise vernetzten Haftklebemasse die zu verklebenden Substrate miteinander verklebt.

Eine wie vorstehend beschriebene Verwendung ist Gegenstand des Hauptanspruchs der vorliegenden Schrift. Die Unteransprüche betreffen vorteilhafte Ausführungsvarianten der erfindungsgemäßen Verwendung.

Als Klebefolien im Sinne der vorliegenden Schrift werden alle zumindest einseitig klebrigen, flächig ausgedehnten Gebilde bezeichnet, also deren Ausdehnung in zwei Raumrichtungen ("Länge", "Breite") wesentlich größer ist als in die dritte Raumrichtung ("Dicke"). Derartige Klebefolien werden auch als Klebebänder bezeichnet, insbesondere dann, wenn wiederum die Ausdehnung in eine der Flächenrichtungen ("Länge") diejenige in die zweite Flächenrichtung ("Breite") deutlich übersteigt. In diesem Fall kann die Längenausdehnung in einer Vielzahl der Fälle vereinfacht als "unendlich" angesehen werden, da Klebebänder häufig in Längsrichtung zu einer Rolle aufgewickelt werden und Abschnitte beliebiger Länge abgelängt werden können.

Als "Klebebandabschnitte" oder als "Stanzlinge" werden im Rahmen dieser Schrift synonym und unabhängig von der tatsächlichen Konfektionierungsweiser insbesondere Flächengebilde aus einer derartige Klebefolie bezeichnet, deren Ausdehnungen in der Flächenebene (Länge, Breite) insbesondere im Sinne der beabsichtigten Anwendung als endlich angesehen werden. Die Begriffe "Klebebandabschnitt" und "Stanzling" werden unabhängig von der tatsächlichen Art der Konfektionierung verwendet, Stanzlinge können beispielsweise durch Zuschnitt, Ausstanzung aus der Klebefolie, von einem Klebeband abgelängt oder auf andere Weise konfektioniert sein. Insbesondere werden auch Flächengebilde als Stanzling bezeichnet, die für die jeweilige Anwendung in eine geeignete Form gebracht wurden

Die Wahl des Ausdrucks "Klebefolie", "Klebeband", "Etikett" oder "Stanzling" im Rahmen dieser Schrift soll in sofern keine weitergehende Information über deren tatsächliche Größe, Ausdehnung oder Form wiedergeben, sofern dies nicht ausdrücklich dargestellt wird.

In einer ersten vorteilhaften Ausführungsform wird die Klebefolie durch die Haftklebemassenschicht an sich dargestellt (einschichtiges System, so genannte "Transferklebefolie" oder "Transferklebeband"). Derartige einschichtige Klebefolien können besonders dünn ausgestaltet werden, so dass einschichtige erfindungsgemäße Klebefolien sich unter anderem insbesondere dann eignen, wenn sehr dünne Klebeverbünde erzielt werden sollen.

In einer weiteren Ausgestaltung der Erfindung umfasst die erfindungsgemäß eingesetzte Klebefolie zumindest zwei außenliegende Klebemassenschichten sowie eine zwischen den Klebemassenschichten angeordnete Trägerschicht (dreischichtige Klebefolie). Optional können weitere Schichten zwischen den außenliegenden Klebemassenschichten vorgesehen sein, beispielsweise weitere Trägerschichten oder funktionelle Schichten. Als Trägerschicht(en) lassen sich hervorragend Folien und/oder Vliese einsetzen.

Zumindest eine der außenliegenden Klebemassenschichten der drei- oder mehrschichtigen Klebefolie ist eine Haftklebemasse, die erhältlich ist durch Ausformung zumindest einer haftklebrigen Schicht aus einer Polyacrylat-Schmelze, die zumindest eine epoxidgruppenhaltige Substanz als Vernetzer und zumindest eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger enthält. Bevorzugt ist auch die zweite außenliegende Klebemassenschicht eine Haftklebemasse, sehr bevorzugt ebenfalls eine solche Haftklebemasse, die erhältlich ist durch Ausformung zumindest einer haftklebrigen Schicht aus einer Polyacrylat-Schmelze, die zumindest eine epoxidgruppenhaltige Substanz als Vernetzer und zumindest eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger enthält.

3

Vorteilhaft können für die beiden außenliegenden Haftklebemassenschichten identische Haftklebemassen eingesetzt werden.

Haftklebemasse

Die erfindungsgemäß eingesetzte Haftklebemasse enthält zumindest ein Polyacrylat. Dabei handelt es sich um ein Polymerisat, welches durch radikalische Polymerisation von Acrylmonomeren, worunter auch Methylacrylmonomere verstanden werden, und gegebenenfalls weiteren, copolymerisierbaren Monomeren erhältlich ist.

Bevorzugt handelt es sich um ein mit Epoxidgruppen vernetzbares Polyacrylat. Entsprechend werden als Monomere oder Comonomere bevorzugt funktionelle, mit Epoxidgruppen vernetzungsfähige Monomere eingesetzt, hier kommen insbesondere Monomere mit Säuregruppen (besonders Carbonsäure-, Sulfonsäure oder Phosphonsäuregruppen) und/oder Hydroxygruppen und/oder Säureanhydridgruppen und/oder Epoxidgruppen und/oder Amingruppen zur Anwendung; bevorzugt sind carbonsäuregruppenhaltige Monomere. Es ist insbesondere vorteilhaft, wenn das Polyacrylat einpolymerisierte Acrylsäure und/oder Methacrylsäure aufweist.

Weitere Monomere, die als Comonomere für das Polyacrylat verwendet werden können, sind zum Beispiel Acrylsäure- und/oder Methacrylsäureester mit bis zu 30 C-Atomen, Vinylester von bis zu 20 C-Atome enthaltenden Carbonsäuren, Vinylaromaten mit bis zu 20 C-Atomen, ethylenisch ungesättigte Nitrile, Vinylhalogenide, Vinylether von 1 bis 10 C-Atome enthaltenden Alkoholen, aliphatische Kohlenwasserstoffe mit 2 bis 8 C-Atomen und 1 oder 2 Doppelbindungen oder Mischungen dieser Monomeren.

Für das erfindungsgemäße Produkt wird vorzugsweise ein Polyacrylat eingesetzt, welches auf die folgende Eduktmischung, enthaltend insbesondere weich machende Monomere, weiterhin Monomere mit funktionellen Gruppen, die in der Lage sind, mit den Epoxygruppen Reaktionen einzugehen, insbesondere Additions- und/oder Substitutionsreaktionen, sowie optional weitere einpolymerisierbare Comonomere, insbesondere hartmachende Monomere. Die Natur des herzustellenden Polyacrylats (Haftklebemasse; Heißsiegelmasse, viskoelastisches nichtklebriges Material und dergleichen) lässt sich insbesondere über eine Variation der Glasübergangstemperatur des Polymers durch unterschiedliche Gewichtsanteile der einzelnen Monomere beeinflussen.

Für rein kristalline Systeme gibt es am Schmelzpunkt $T_s$ ein thermisches Gleichgewicht zwischen Kristall und Flüssigkeit. Amorphe oder teilkristalline Systeme sind hingegen durch die Umwandlung der mehr oder weniger harten amorphen bzw. teilkristallinen Phase in eine weichere (gummiartige bis zähflüssige) Phase gekennzeichnet. Am Glaspunkt kommt es insbesondere bei polymeren Systemen zum "Auftauen" (bzw. "Einfrieren" beim Abkühlen) der Brownschen Molekularbewegung längerer Kettensegmente.

Der Übergang vom Schmelzpunkt $T_s$ (auch "Schmelztemperatur"; eigentlich nur für reinkristalline Systeme definiert; "Polymerkristalle") zum Glasübergangspunkt $T_G$ (auch "Glasübergangstemperatur", "Glastemperatur") kann daher als fließend angesehen werden, je nach dem Anteil der Teilkristallinität der untersuchten Probe.

Im Rahmen dieser Schrift wird im Sinne der vorstehenden Ausführen bei der Angabe des Glaspunktes der Schmelzpunkt mit umfasst, es wird also als Glasübergangspunkt (oder gleichbedeutend auch als Glasübergangstemperatur) auch der Schmelzpunkt für die entsprechenden "schmelzenden" Systeme verstanden. Die Angaben der Glasübergangstemperaturen beziehen sich auf die Bestimmung mittels dynamisch mechanischer Analyse (DMA) bei geringen Frequenzen.

Zur Erzielung von Polymeren mit gewünschten Glasübergangstemperaturen wird die mengenmäßige Zusammensetzung der Monomermischung vorteilhaft derart gewählt, dass sich nach einer Gleichung (G1) in Analogie zur *Fox*-Gleichung (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad (G1)$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Bevorzugt wird ein Polyacrylat eingesetzt, dass auf die folgende Monomerzusammensetzung zurückgeführt werden kann:

a) Acrylsäureester und/oder Methacrylsäureester der folgenden Formel

$$CH_2 = C(R^I)(COOR^{II})$$

wobei $R^I$ = H oder $CH_3$ und $R^{II}$ ein Alkylrest mit 4 bis 14 C-Atomen ist,

b) olefinisch ungesättigte Monomere mit funktionellen Gruppen der für eine Reaktivität mit Epoxidgruppen bereits definierten Art,

c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 C (DMA bei geringen Frequenzen) aufweist.

Es ist zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Die Monomere der Komponente (a) sind insbesondere weichmachende und/oder unpolare Monomere. Vorzugsweise werden für die Monomere (a) Acrylmonomere eingesetzt, die Acryl- und Methacrylsäureester mit Alkylgruppen, bestehend aus 4 bis 14 C-Atomen, bevorzugt 4 bis 9 C-Atomen, umfassen. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie z. B. 2-Ethylhexylacrylat, 2-Ethylhexylmethacrylat.

Die Monomere der Komponente (b) sind insbesondere olefinische ungesättigter Monomere (b) mit funktionellen Gruppen, insbesondere mit funktionellen Gruppen, die eine Reaktion mit den Epoxidgruppen eingehen können.

Bevorzugt werden für die Komponente (b) Monomere mit solchen funktionellen Gruppen eingesetzt, die aus der folgenden Aufzählung ausgewählt sind: Hydroxy-, Carboxy-, Sulfonsäure-, oder Phosphonsäuregruppen, Säureanhydride, Epoxide, Amine.

Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können im Sinne der Komponente (c) alle vinylisch-funktionalisierten Verbindungen eingesetzt werden, die mit der Komponente (a) und/oder der Komponente (b) copolymerisierbar sind, und können auch zur Einstellung der Eigenschaften der resultierenden Haftklebemasse dienen.

Beispielhaft genannte Monomere für die Komponente (c) sind:

Methylacrylat, Ethylacrylat, Propylacrylat, Methylmethacrylat, Ethylmethacrylat, Benzylacrylat, Benzylmethacrylat, sec.-Butylacrylat, tert-Butylacrylat, Phenylacrylat, Phenylmethacrylat, Isobornylacrylat, Isobornylmethacrylat, t-Butylphenylacrylat, t-Butylaphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylen-glycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat,

Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid,

Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen sind, zum Beispiel Tetrahydrofufurylacrylat, N-tert-Butylacrylamid, Allylacrylat wobei diese Aufzählung nicht abschließend ist.

Weiterhin können den Polyacrylaten auch klebrig machende Harze beigemischt werden. Als zuzusetzende klebrig machende Harze sind die vorbekannten und in der Literatur beschriebenen Klebharze einsetzbar. Insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Bevorzugt lassen sich Pinen-, Inden- und Kolophoniumharze einsetzen, deren disproportionierte, hydrierte, polymerisierte, veresterte Derivate und Salze, Terpenharze und Terpenphenolharze sowie C5-, C9- und andere Kohlenwasserstoffharze. Auch Kombinationen dieser und weiterer Harze können vorteilhaft eingesetzt werden, um die Eigenschaften der resultierenden Klebmasse wunschgemäß einzustellen. Besonders bevorzugt lassen sich alle mit dem entsprechenden Polyacrylat kompatiblen (löslichen) Harze einsetzen. In einer besonders bevorzugten Vorgehensweise werden Terpenphenolharze und/oder Kolophoniumester hinzugesetzt.

Optional können auch pulver- und granulatförmige Füllstoffe, Farbstoffe und Pigmente, besonders auch abrasive und verstärkende, wie zum Beispiel Kreiden (CaCO$_3$), Titandioxide, Zinkoxide und Ruße auch zu hohen Anteilen, das heißt von 1 bis 50 Gew.-%, bezogen auf die Gesamtrezeptur beigemischt werden.

Sehr bevorzugt können verschiedene Kreideformen als Füllstoff eingesetzt werden, wobei besonders bevorzugt Mikrosöhl-Kreide eingesetzt wird. Bei bevorzugten Anteilen bis zu 30 Gew.-% verändern sich die klebtechnischen Eigenschaften (Scherfestigkeit bei RT, Sofortklebkraft auf Stahl und PE) durch den Füllstoffzusatz praktisch nicht.

Weiterhin können schwerentflammbare Füllstoffe, wie beispielsweise Ammoniumpolyphosphat, weiterhin elektrisch leitfähige Füllstoffe (wie beispielsweise Leitruß, Kohlenstofffasern und/oder silberbeschichtete Kugeln), weiterhin thermisch leitfähige Materialien (wie beispielsweise Bornitrid, Aluminiumoxid, Siliciumcarbid), weiterhin ferromagnetische Additive (wie beispielsweise Eisen-(III)-oxide), weiterhin Alterungsschutzmitteln, Lichtschutzmitteln, Ozonschutzmitteln und Compoundierungsmittel zugegeben werden. Als Alterungsschutzmittel können bevorzugt sowohl primäre, zum Beispiel 4-Methoxyphenol, als auch sekundäre Alterungsschutzmittel, zum Beispiel Irgafos® TNPP der Fa. Ciba Geigy, auch in Kombination miteinander eingesetzt werden. Hier soll nur an dieser Stelle auf weitere entsprechenden Irganox® Typen der Fa. Ciba Geigy bzw. Hostano® der Firma Clariant verwiesen werden. Als weitere hervorragende Mittel gegen Alterung können Phenothiazin (C-Radikalfaenger) sowie Hydrochinonmethylether in Gegenwart von Sauerstoff sowie Sauerstoff selbst eingesetzt werden.

Weiterhin kann optional das Polyacrylat auch mit anderen Polymeren geblendet bzw. abgemischt werden. Hierzu eignen sich Polymere auf Basis von Naturkautschuk, Synthesekautschuk, EVA, Siliconkautschuk, Acrylkautschuk, Polyvinylether.

Weiterhin sind Gegenstand der Zusammensetzung der Haftklebemasse Vernetzer auf Epoxid Basis. Als epoxidgruppenhaltige Substanzen werden insbesondere multifunktionelle Epoxide eingesetzt, also solche, die mindestens zwei Epoxideinheiten pro Molekül aufweisen (also mindestens bifunktional sind). Dies können sowohl aromatische als auch aliphatische Verbindungen sein.

Hervorragend geeignete multifunktionelle Epoxide sind Oligomere des Epichlorhydrins, Epoxyether mehrwertiger Alkohole [insbesondere Ethylen-, Propylen-, und Butylenglycole, Polyglycole, Thiodiglycole, Glycerin, Pentaerythrit, Sorbit, Polyvinylalkohol, Polyallylalkohol und ähnliche], Epoxyether mehrwertiger Phenole [insbesondere Resorcin, Hydrochinon, Bis-(4-hydroxyphenyl)-methan, Bis-(4-hydroxy-3-methylphenyl)-methan, Bis-(4-hydroxy-3,5-dibromphenyl)-methan, Bis-(4-hydroxy-3,5-difluorphenyl)-methan, 1,1-Bis-(4-hydroxyphenyl)ethan, 2,2-Bis-(4-hydroxyphenyl)propan, 2,2-Bis-(4-hydroxy-3-methylphenyl)-propan, 2,2-Bis-(4-hydroxy-3-chlorphenyl)-propan, 2,2-Bis-(4-hydroxy-3,5-dichlorphenyl)-propan, 2,2-Bis-(4-hydroxy-3,5-dichlorphenyl)-propan, Bis-(4-hydroxyphenyl)-phenylmethan, Bis-(4-hydroxyphenyl)-phenylmethan, Bis-(4-hydroxyphenyl)diphenylmethan, Bis (4-hydroxyphenyl)-4'-methylphenylmethan, 1,1-Bis-(4-hydroxyphenyl)-2,2,2-trichlorethan, Bis-(4-hydroxyphenyl)-(4-chlorphenyl)-methan, 1,1-Bis-(4-hydroxyphenyl)-cyclohexan, Bis-(4-hydroxyphenyl)-cyclohexylmethan, 4,4'-Dihydroxydiphenyl, 2,2'-Dihydroxydiphenyl, 4,4'-Dihydroxydiphenylsulfon] sowie deren Hydroxyethylether, Phenol-Formaldehyd-Kondensationsprodukte, wie Phenolalkohole, Phenolaldehydharze und ähnliche, S- und N-haltige Epoxide (zum Beispiel N,N-Diglycidylanillin, N,N'-Dimethyldiglycidyl-4,4-Diaminodiphenylmethan) sowie Epoxide, welche nach üblichen Verfahren aus mehrfach ungesättigten Carbonsäuren oder einfach ungesättigten Carbonsäureresten ungesättigter Alkohole hergestellt worden sind, Glycidylester, Polyglycidylester, die durch Polymerisation oder Mischpolymerisation von Glycidylestern ungesättigter Säuren gewonnen werden können oder aus anderen sauren Verbindungen (Cyanursäure, Diglycidylsulfid, cyclischem Trimethylentrisulfon bzw. deren Derivaten und anderen) erhältlich sind.
Sehr geeignete Ether sind beispielsweise 1,4-Butandioldiglycidether, Polyglycerol-3-Glycidether, Cyclohexan-dimethanoldiglycidether, Glycerintriglycidether, Neopentylglykoldiglycidether, Pentaerythrittetraglycidether, 1,6-Hexandioldiglycidether), Polypropylenglykoldiglycidether, Trimethylolpropantriglycidether, Bisphenol-A-Diglycidether und Bisphenol-F-Diglycidether,

Weiterhin sind der Polyacrylathaftklebemasse Beschleuniger für die Vernetzungsreaktion mit den Epoxiden zugesetzt. Als Beschleuniger werden besonders bevorzugt Amine (formell als Substitutionsprodukte des Ammoniaks aufzufassen; in den folgenden Formeln sind diese Substituenten durch "R" dargestellt und umfassen insbesondere Alkyl- und/oder Arylreste und/oder andere organische Reste) eingesetzt, insbesondere bevorzugt solche Amine, die mit den Bausteinen der Polyacrylate keine oder nur geringfüge Reaktionen eingehen.

Prinzipiell können als Beschleuniger sowohl primäre ($NRH_2$), sekundäre ($NR_2H$) als auch tertiäre Amine ($NR_3$) gewählt werden, selbstverständlich auch solche, die mehrere primäre und/oder sekundäre und/oder tertiäre Amingruppen aufweisen. Besonders bevorzugte Beschleuniger sind aber - insbesondere in Verbindung mit den vorgenannten Gründen - tertiäre Amine, wie beispielsweise Triethylamin, Triethylendiamin, Benzyldimethylamin, Dimethylamino-methylphenol, 2,4,6-Tris-(N,N-dimethylamino-methyl)-phenol, N,N'-Bis(3-(dimethyl-amino)propyl)harnstoff.

Als Beschleuniger werden können vorteilhaft auch multifunktionelle Amine wie Diamine, Triamine und/oder Tetramine eingesetzt.
Hervorragend geeignet sind zum Beispiel Diethylentriamin, Triethylentetramin, Trimethylhexamethylendiamin,

Weiterhin hervorragend geeignete Beschleuniger sind Pyridin, Imidazole (wie beispielsweise 2-Methylimidazol), 1,8-Diazabicyclo(5.4.0)undec-7-en. Auch cyclo-aliphatische Polyamine können hervorragend als Beschleuniger eingesetzt werden.

Geeignet sind auch Beschleuniger auf Phosphatbasis wie Phosphine und/oder Phosphoniumverbindungen, wie beispielsweise Triphenylphosphin oder Tetraphenylphosphonium-tetraphenylborat.

Das Vernetzer-Beschleuniger-System wird dermaßen gewählt, dass die funktionellen Gruppen mit den Epoxidgruppen eine Verknüpfungsreaktion, insbesondere in Form einer Addition oder Substitution, eingehen können. Bevorzugt kommt es also zu einer Verknüpfung der die funktionellen Gruppen tragenden Bausteine mit den die Epoxidgruppen tragenden Bausteinen (insbesondere im Sinne einer Vernetzung der entsprechenden die funktionellen Gruppen tragenden Polymerbausteine über die Epoxidgruppen tragenden Substanzen als Verknüpfungsbrücken).

Das Vernetzer-Beschleuniger-System dient somit zur thermischen Vernetzung von Polyacrylaten, wobei zumindest ein Teil der Acrylsäureester und/oder Methacrylsäureester funktionelle Gruppen enthält, die mit Epoxidgruppen in vorstehend geschilderter Weise, insbesondere unter Bildung einer kovalenten Bindung, reagieren können.

Ein spezielles Vernetzungsverfahren der erfindungsgemäßen Haftklebebänder ist die thermische Vernetzung von Heißschmelz-Haftklebemassen.

Bei diesem Vernetzungsverfahren geht man insbesondere vorteilhaft derart vor, dass man die Vernetzung in der Schmelze des Polyacrylates initiiert und dieses danach zu einem Zeitpunkt abkühlt, zu dem das Polyacrylat noch hervorragend verarbeitbar ist, also beispielsweise homogen beschichtbar und/oder hervorragend ausformbar. Insbesondere für Klebebänder ist ein homogenes, gleichmäßiges Strichbild erforderlich, wobei sich in der Klebemassenschicht keine Klumpen, Stippen oder ähnliches finden lassen sollen. Entsprechend homogene Polyacrylate werden auch für die anderen Anwendungsformen verlangt.
Die Ausformbarkeit bzw. Beschichtbarkeit ist gegeben, wenn das Polyacrylat noch nicht oder erst zu einem geringen Grad vernetzt ist; vorteilhaft beträgt der Vernetzungsgrad bei Beginn der Abkühlung nicht mehr als 10 %, bevorzugt nicht mehr als 3 %, noch besser nicht mehr als 1 %. Die Vernetzungsreaktion schreitet auch nach der Abkühlung fort, bis der endliche Vernetzungsgrad erreicht ist.
Der Begriff "abkühlen" umfasst hier und im Folgenden auch das passive Abkühlenlassen durch Entfernung der Beheizung.
Das Vernetzungsverfahren kann insbesondere derart durchgeführt werden, dass man die Vernetzung in der Schmelze des Polyacrylats in Gegenwart des Vernetzers, insbesondere des Vernetzer-Beschleuniger-Systems, initiiert (also thermisch), bevorzugt zu einem Zeitpunkt kurz vor der Weiterverarbeitung, insbesondere der Ausformung oder Beschichtung. Dies findet für gewöhnlich in einem Verarbeitungsreaktor (Compounder, beispielweise ein Extruder) statt. Dann wird die Masse aus dem Compounder entnommen und wie gewünscht weiterverarbeitet und/oder ausgeformt. Bei der Verarbeitung bzw. Ausformung oder danach wird das Polyacrylat abgekühlt, indem aktiv abgekühlt wird und/oder die Erwärmung eingestellt wird oder indem das Polyacrylat auf eine Temperatur unterhalb der Verarbeitungstemperatur beheizt wird (ggf. auch hier nach vorheriger aktiver Kühlung), wenn die Temperatur nicht bis auf Raumtemperatur abfallen soll.

Die Weiterverarbeitung bzw. Ausformung kann insbesondere vorteilhaft die Beschichtung auf einen permanenten oder temporären Träger sein.

Bei einer sehr vorteilhaften Variante der Erfindung wird das Polyacrylat bei der oder nach der Entnahme aus dem Verarbeitungsreaktor auf einen permanenten oder temporären Träger beschichtet und bei der Beschichtung oder nach der Beschichtung die Polyacrylatmasse auf Raumtemperatur (oder eine Temperatur in der Nähe der Raumtemperatur) abkühlt, insbesondere unmittelbar nach der Beschichtung.

Initiierung "kurz vor" der Weiterverarbeitung bedeutet insbesondere, dass mindestens eine der zur Vernetzung erforderlichen Komponenten (insbesondere die epoxidgruppenhaltigen Substanzen und/oder der Beschleuniger) so spät wie möglich im Hotmelt (also in der Schmelze) zugesetzt werden (homogene Verarbeitbarkeit aufgrund hier noch geringen Vernetzungsgrades; s.o.), aber so früh wie nötig, dass eine gute Homogenisierung mit der Polymermasse erfolgt.

Das Vernetzer-Beschleuniger-System ist so gewählt, dass die Vernetzungsreaktion bei einer Temperatur unterhalb der Schmelztemperatur der Polyacrylatmasse, insbesondere bei Raumtemperatur, voranschreitet.

Die Bezeichnung "Vernetzung bei Raumtemperatur" bezieht sich dabei insbesondere auf die Vernetzung bei üblichen Lagertemperaturen von Klebebändern und soll in sofern nicht auf 20 °C beschränkt sein. Selbstverständlich ist es erfindungsgemäß auch vorteilhaft, wenn die Lagertemperatur aufgrund witterungsbedingter oder sonstiger Temperaturschwankungen von 20 °C abweicht - oder die Raumtemperatur aufgrund lokaler Gegebenheiten von 20°C differiert - und die Vernetzung - insbesondere ohne weitere Energiezufuhr - fortschreitet.

Herstellung der Polyacrylate

Die Herstellung der Polyacrylate kann nach den dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei man bei den üblichen Temperaturen in Substanz, in Emulsion, zum Beispiel in Wasser oder flüssigen Kohlenwasserstoffen, oder in Lösung polymerisiert.

Vorzugsweise werden die Polyacrylate durch Polymerisation der Monomeren in Lösungsmitteln, insbesondere in Lösungsmitteln eines Siedebereichs von 50 bis 150 °C, vorzugsweise von 60 bis 120 °C unter Verwendung der üblichen Mengen an Polymerisationsinitiatoren, die im allgemeinen bei 0,01 bis 5, insbesondere bei 0,1 bis 2 Gew.-% (bezogen auf das Gesamtgewicht der Monomeren) liegt, hergestellt.

Prinzipiell eignen sich alle für Acrylate dem Fachmann geläufigen, üblichen Initiatoren. Beispiele für Radikalquellen sind Peroxide, Hydroperoxide und Azoverbindungen, zum Beispiel Dibenzoyl-peroxid, Cumolhydroperoxid, Cyclohexanonperoxid, Di-t-butylperoxid, Cyclohexyl-sulfonylacetylperoxid, Diisopropylpercarbonat, t-Butylperoktoat, Benzpinacol. In einer sehr bevorzugten Vorgehensweise wird als radikalischer Initiator 2,2'-Azobis(2-methylbutyronitril) (Vazo® 67™ der Fa. DuPont) oder 2,2'-Azobis(2-methylpropionitril) (2,2'-Azobisisobutyronitril; AIBN; Vazo® 64™ der Fa. DuPont) verwendet.

Als Lösungsmittel kommen Alkohole, wie Methanol, Ethanol, n-und iso-Propanol, n-und isoButanol, vorzugsweise Isopropanol und/oder Isobutanol; sowie Kohlenwasserstoffe wie Toluol und insbesondere Benzine eines Siedebereichs von 60 bis 120 °C in Frage. Insbesondere können Ketone, wie vorzugsweise Aceton, Methylethylketon, Methylisobutylketon und Ester, wie Essigsäureethylester sowie Gemische von Lösungsmitteln der genannten Art eingesetzt werden, wobei Gemische, die Isopropanol, insbesondere in Mengen von 2 bis 15 Gew.-%, bevorzugt 3 bis 10 Gew.-%, bezogen auf das eingesetzte Lösungsgemisch, enthalten, vorgezogen werden.

Die gewichtsmittleren Molekulargewichte $M_w$ der hergestellten Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes $M_w$ und der Polydispersität PD in dieser Schrift beziehen sich auf die Bestimmung per Gelpermeationschromatographie]. Dazu kann es vorteilhaft sein, die Polymerisation in Gegenwart geeigneter Polymerisationsregler wie Thiolen, Halogenverbindungen und/oder Alkoholen durchzuführen, um das gewünschte mittlere Molekulargewicht einzustellen.

Das Polyacrylat hat vorzugsweise einen K-Wert von 30 bis 90, besonders bevorzugt von 40 bis 70, gemessen in Toluol (1 %ige Lösung, 21°C). Der K-Wert nach Fikentscher ist ein Maß für das Molekulargewicht und Viskosität des Polymers.

Polyacrylate, die eine enge Molekulargewichtsverteilung (Polydispersität PD < 4) haben, sind besonders geeignet. Diese Massen haben trotz eines relativ niedrigen Molekulargewichts nach dem Vernetzen eine besonders gute Scherfestigkeit. Zudem ermöglich das niedrigere Molekulargewicht eine leichtere Verarbeitung aus der Schmelze, da die Fließviskosität gegenüber einem breiter verteilten Polyacrylats bei weitgehend gleichen Anwendungseigenschaften geringer ist. Eng verteilte Polyacrylate können vorteilhaft durch anionische Polymerisation oder durch kontrollierte radikalische Polymerisationsmethoden hergestellt werden, wobei letzteres besonders gut geeignet ist. Beispiele für derartige Polyacrylate, die nach dem RAFT Verfahren hergestellt werden, sind in der US 6,765,078 B2 und US 6,720,399 B2 beschrieben. Auch über N-Oxyle lassen sich entsprechende Polyacrylate herstellen, wie beispielsweise in der EP 1 311 555 B1 beschrieben ist. Auch die Atom Transfer Radical Polymerization (ATRP) lässt sich in vorteilhafter Weise zur Synthese eng verteilter Polyacrylate einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (vgl. beispielsweise EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

Weitere Verfahrensdurchführung

Die Aufkonzentration des Polymerisats (also des Polymerisationsergebnisses) kann in Abwesenheit der Vernetzer- und Beschleunigersubstanzen geschehen. Es ist aber auch möglich, eine dieser Verbindungsklassen dem Polymerisat bereits vor der Aufkonzentration zuzusetzen, so dass die Aufkonzentration dann in Gegenwart dieser Substanz (en) erfolgt.

Die Polymerisate werden dann in einen Compounder überführt. In besonderen Ausführungen des erfindungsgemäßen Verfahrens kann die Aufkonzentration und die Compoundierung im selben Reaktor stattfinden. Insbesondere kann als Compounder ein Extruder eingesetzt werden. Die Polymerisate liegen im Compounder in der Schmelze vor, entweder indem sie bereits im Schmelzzustand eingegeben werden oder indem sie im Compounder bis zur Schmelze erhitzt werden. Im Compounder werden die Polymerisate durch Beheizung in der Schmelze gehalten. Solange weder Vernetzer (Epoxide) noch Beschleuniger im Polymerisat vorliegen, wird die mögliche Temperatur in der Schmelze durch die Zersetzungstemperatur des Polymerisates begrenzt. Die Prozesstemperatur im Compounder liegt üblicherweise zwischen 80 bis 150 °C, insbesondere zwischen 100 und 120 °C.

Die epoxidgruppenhaltigen Substanzen werden dem Polymerisat vor oder mit der Beschleunigerzugabe zugesetzt.

Die epoxidgruppenhaltigen Substanzen können den Monomeren bereits vor oder während der Polymerisationsphase zugegeben werden, wenn sie für diese hinreichend stabil sind. Vorteilhaft werden die epoxidgruppenhaltigen Substanzen dem Polymerisat aber entweder vor der Zugabe in den Compounder oder bei der Zugabe in den Compounder zugesetzt, also zusammen mit den Polymerisaten in den Compounder gegeben.

In sehr vorteilhafter Vorgehensweise werden die Beschleunigersubstanzen den Polymerisaten kurz vor der Weiterverarbeitung der Polymere, insbesondere einer Beschichtung oder anderweitigen Ausformung, zugesetzt.

Das Zeitfenster der Zugabe vor der Beschichtung richtet sich insbesondere nach der zur Verfügung stehenden Topfzeit, also der Verarbeitungszeit in der Schmelze, ohne dass die Eigenschaften des resultierenden Produktes nachteilig verändert werden. Mit dem Verfahren können Topfzeiten von einigen Minuten bis zu einigen zehn Minuten erzielt werden (je nach Wahl der Versuchsparameter), so dass der Beschleuniger innerhalb dieser Zeitspanne vor der Beschichtung zugesetzt werden sollte. Vorteilhaft wird der Beschleuniger so spät wie möglich im Hotmelt zugesetzt, aber so früh wie nötig, dass noch eine gute Homogenisierung mit der Polymermasse erfolgt. Als sehr vorteilhaft haben sich hier Zeitspannen von 2 bis 10 Minuten, insbesondere von mehr als 5 Minuten, bei einer Prozesstemperatur von 110 bis 120 °C herausgestellt.

Die Vernetzer (Epoxide) und die Beschleuniger können auch beide kurz vor der Weiterverarbeitung des Polymers zugesetzt werden, also vorteilhaft in der Phase, wie sie vorstehend für die Beschleuniger dargestellt ist. Hierzu ist es vorteilhaft, das Vernetzer-Beschleuniger-System an ein- und derselben Stelle gleichzeitig in den Prozess eingebracht werden, auch als Epoxid-Beschleuniger-Abmischung.

Grundsätzlich ist es auch möglich, die Zugabezeitpunkte bzw. Zugabestellen an Vernetzer und Beschleuniger in den oben dargestellten Ausführungen zu vertauschen, so dass der Beschleuniger vor den epoxidgruppenhaltigen Substanzen zugesetzt werden kann.

Im Compoundierungsprozess beträgt die Temperatur des Polymerisats bei der Zugabe der Vernetzer und/oder der Beschleuniger zwischen 50 und 150 °C, bevorzugt zwischen 70 und 130 °C, besonders bevorzugt zwischen 80 und 120 °C.

Es hat sich grundsätzlich als sehr vorteilhaft herausgestellt, wenn man den Vernetzer, also die epoxidgruppenhaltige Substanz, zu 0,1 - 5 Gew.-%, bezogen auf das Polymer ohne Additive, hinzusetzt.

Vorteilhaft ist es, den Beschleuniger zu 0,05 - 5 Gew.-%, bezogen auf das additivfreie Polymer, zuzugeben.

Hohe Vernetzermengen und/oder hohe Beschleunigermengen können dazu dienen, den erzielbaren (End-) Vernetzungsgrad zu erhöhen und/oder den Zeitraum bis zur Erzielung des Endvernetzungsgrades zu verringern, hierdurch kann das Abdichtungsvermögen, welches die Klebefolie in einer Klebefuge aufweist, optimiert werden.

Es ist besonders vorteilhaft, wenn der Vernetzeranteil derart gewählt wird, dass ein elastischer Anteil der vernetzten Polyacrylate von mindestens 20 % resultiert. Bevorzugt beträgt der elastische Anteil mindestens 40 %, weiter bevorzugt mindestens 60 %.

Prinzipiell kann die Zahl der funktionellen Gruppen, also insbesondere der Carbonsäuregruppen, derart gewählt werden, dass diese bezüglich der Epoxidgruppen im Überschuss vorliegt, dass es im Polymer also nur hinreichend viele funktionelle Gruppen - also potentielle Vernetzungs- oder Verknüpfungsstellen im Polymer - gibt, um die gewünschte Vernetzung zu erzielen.

Zur Angabe der Verhältnisse der Bestandteile des Vernetzer-Beschleuniger-Systems zueinander kann insbesondere das Verhältnis der Anzahl der Epoxidgruppen im Vernetzer zur Anzahl der reaktiven funktionellen Gruppen im Polymer herangezogen werden. Grundsätzlich kann dieses Verhältnis frei gewählt werden, so dass entweder ein Überschuss an funktionellen Gruppen, zahlenmäßige Gleichheit der Gruppen oder ein Überschuss an Epoxidgruppen vorliegt. Vorteilhaft wird dieses Verhältnis derart gewählt, dass die Epoxidgruppen im Unterschuss (bis maximal anzahliger Gleichheit) vorliegen; ganz besonders bevorzugt liegt das Verhältnis der Gesamtzahl der Epoxidgruppen im Vernetzer zur Anzahl der funktionellen Gruppen im Polymer im Bereich von 0,1 : 1 bis 1 : 1.

Eine weitere Kennzahl ist das Verhältnis der Anzahl beschleunigungswirksamer Gruppen im Beschleuniger zur Anzahl der Epoxidgruppen im Vernetzer. Als beschleunigungswirksame Gruppen werden insbesondere sekundäre Amingruppen und tertiäre Amingruppen gerechnet. Auch dieses Verhältnis kann grundsätzlich frei gewählt werden, so dass entweder ein Überschuss an beschleunigungswirksamen Gruppen, zahlenmäßige Gleichheit der Gruppen oder ein Überschuss an Epoxidgruppen vorliegt.

Es ist besonders vorteilhaft, wenn das Verhältnis der Anzahl beschleunigungswirksamer Gruppen im Beschleuniger zur Anzahl der Epoxidgruppen im Vernetzer von 0,2 : 1 bis 4 : 1 beträgt.

Nach der Compoundierung der Masse erfolgt die Weiterverarbeitung des Polymers, insbesondere die Beschichtung auf einen permanenten oder auf einen temporären Träger (der permanente Träger verbleibt bei der Anwendung mit der Klebemassenschicht verbunden, während der temporäre Träger in dem weiteren Verarbeitungsprozess, zum Beispiel der Konfektionierung der Klebefolie, oder bei der Anwendung von der Klebemassenschicht wieder abgenommen wird).

Die Ausformung der Haftklebemassen zur Schicht kann mit dem Fachmann bekannten Hotmelt-Beschichtungsdüsen oder bevorzugt mit Walzenauftragswerken, auch Beschichtungskalander genannt, erfolgen. Die Beschichtungskalander können vorteilhaft aus zwei, drei, vier oder mehr Walzen bestehen.

Bevorzugt ist zumindest eine der Walzen mit einer anti-adhäsiven Walzenoberfläche versehen, bevorzugt alle Walzen, die mit dem Polyacrylat in Berührung kommen. Es können in günstiger Vorgehensweise alle Walzen des Kalanders anti-adhäsiv ausgerüstet sein.

Als anti-adhäsive Walzenoberfläche wird besonders bevorzugt ein Stahl-Keramik-Silikon-Verbundwerkstoff eingesetzt. Derartige Walzenoberflächen sind gegen thermische und mechanische Belastungen resistent.

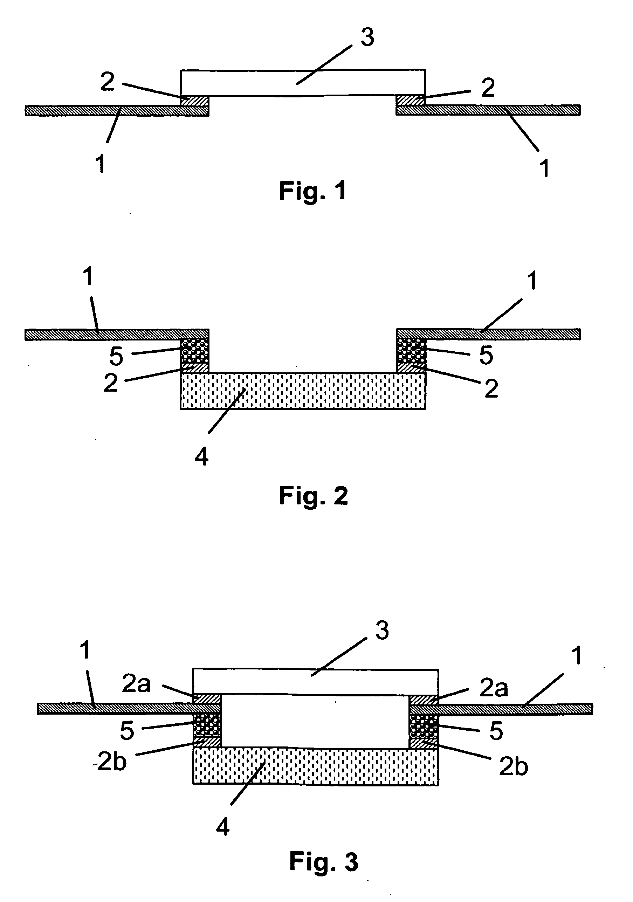

Die Beschichtung kann insbesondere vorteilhaft entsprechend der Beschichtungsverfahren, wie sie in der WO 2006/027387 A1 von Seite 12, Zeile 5 bis Seite 20, Zeile 13 dargestellt sind, und zwar insbesondere unter den Abschnitten "Variante A" (Seite 12), "Variante B" (Seite13), "Variante C" (Seite 15), "Verfahren D" (Seite 17), "Variante E" (Seite 19) sowie die Figuren Fig. 1 bis 6. Die genannten Offenbarungsstellen aus der WO 2006/027387 A1 seien daher explizit in den Offenbarungsgehalt der vorliegenden Schrift eingeschlossen.

Besonders gute Ergebnisse werden bei den Zwei- und Dreiwalzenkalanderwerken durch die Verwendung von Kalanderwalzen erzielt, die mit anti-adhäsiven Oberflächen ausgerüstet sind oder mit oberflächenmodifizierten Walzen, hier besonders vorteilhaft zu erwähnen sind Metall-Rasterwalzen. Diese Metall-Rasterwalzen, vorzugsweise Stahl-Rasterwalzen, weisen eine regelmäßig geometrisch unterbrochene Oberflächenstruktur auf. Dies gilt insbesondere vorteilhaft für die Überführungswalze ÜW. Diese Oberflächen tragen in besonders vorteilhafter Weise zu einem Gelingen des Beschichtungsverfahrens bei, da anti-adhäsive und strukturierte Oberflächen die Übertragung der Polyacrylatmasse selbst auf anti-adhäsiv ausgerüstete Trägeroberflächen ermöglichen. Verschiedene Arten anti-adhäsiver Oberflächenbeschichtungen können für die Kalanderwalzen verwendet werden. Als besonders geeignet haben sich auch hier zum Beispiel die bereits vorstehend genannten Metall-Keramik-Silikon-Verbundwerkstoffe PALLAS SK-B-012/5 der Fa. PALLAS OBERFLÄCHENTECHNIK GMBH, Deutschland sowie AST 9984-B der Fa. ADVANCED SURFACE TECHNOLOGIES, Deutschland, erwiesen.

Insbesondere die Überführungswalzen (ÜW) können dabei als Stahl-Rasterwalzen ausgebildet sein. Besonders bevorzugt eingesetzt als Überführungswalze ÜW werden beispielsweise Stahl-Rasterwalzen mit der Bezeichnung 140 Ucm und einer Stegbreite von 10 $\mu$m, zum Beispiel solche von der Firma Saueressig, Deutschland.

Bei der Beschichtung können insbesondere bei Einsatz der Mehrwalzenkalander Beschichtungsgeschwindigkeiten bis 300 m/min verwirklicht werden.

Vorteilhafte Klebefolienaufbauten

Mittels der Haftklebemassenschichten können grundsätzlich sowohl einschichtige als auch drei- und mehrschichtige Klebefolien in beliebigen Dicken hergestellt und erfindungsgemäß verwendet werden. Die erfindungsgemäße Verwendung ist aber besonders vorteilhaft beim Einsatz dünner Klebefolien, da die Verklebungsstellen in der Elektronik-Konsumgüterindustrie üblicherweise dünn gehalten werden sollen.

Bevorzugt haben die erfindungsgemäß verwendeten Klebefolien eine Dicke von 200 $\mu$m oder weniger, mehr bevorzugt von 100 $\mu$m oder weniger. Um eine hinreichende Stabilität innerhalb der Klebefolie zu gewährleisten, sind insbesondere für drei- und mehrschichtige Aufbauten Dicken von mindestens 30 $\mu$m vorteilhaft. Für spezielle Anwendungen im Bereich der Elektronikartikel, wie etwa zur Verklebung im Touchscreen- und Touchpanel-Bereich, sind insbesondere Klebefolien mit einer Gesamtdicke von 60 bis 80 $\mu$m vorteilhaft.

Dreischichtige Klebefolienaufbauten lassen sich beispielsweise erhalten umfasst durch beidseitige Beschichtung der Haftklebemasse auf eine Trägerschicht. In sehr bevorzugten Ausführungsformen werden als Trägerschichten Polymerfolien oder Vliese eingesetzt. Die Träger werden in einer bevorzugten Form doppelseitig beschichtet, wobei die Masseaufträge in ihrer chemischen Natur und/oder Dimensionen beidseitig gleich sein oder sich auf den beiden Seiten auch unterscheiden können.

Die Haftklebemasse wird bevorzugt auf mindestens einer Seite der Klebefolie mit einer Trennfolie oder einem Trennpapier geschützt, um das Wickeln als Klebeband zur Rolle und das Wieder-Abrollen des Haftklebebandes zu ermöglichen. In einer weiteren Ausführungsform werden beide Haftklebemassenseiten mit einer Trennfolie und/oder einem Trennpapier abgedeckt. Des Weiteren ist es möglich, dass die Trägerschicht mit einer oder mehreren Beschichtungen versehen ist. Weiterhin ist es möglich, dass beide Seiten der Haftklebefolie mit unterschiedlichen Haftklebemassen ausgestattet sind.

Der Haftklebemassenauftrag drei- oder mehrschichtigen Klebefolien beträgt auf jeder Seite - unabhängig voneinander - bevorzugt zwischen 5 und 193 g/m$^2$, sehr bevorzugt zwischen 30 und 100 g/m$^2$, beispielsweise 50 g/m$^2$. Symmetrische Aufbauten sind vorteilhaft.

Zur Herstellung einschichtiger Klebefolien (Transferklebefolien), also solche Klebefolien, die einschichtig zum Einsatz kommen, ist es notwendig, diese vor der Anwendung zur Handhabung mit einem temporären Träger zu versehen. Die Darstellung eines derartigen Produktaufbaus umfasst die einseitige Beschichtung der Haftklebemasse auf eine Trennfolie oder ein Trennpapier. Die transparente Haftklebemasse kann auf der freiliegenden Seite mit einer weiteren Trennfolie oder einem weiteren Trennpapier ausgerüstet werden, um auch hier das Wickeln als Klebeband zur Rolle und das Wieder-Abrollen des Haftklebebandes zu ermöglichen. In einer weiteren Ausführungsform werden beide Seiten mit einer Trennfolie und/oder Trennpapier abgedeckt. Der Haftklebemassenauftrag einschichtiger Systeme - und somit die Stärke der einschichtigen Klebefolie bei der Verwendung - beträgt bevorzugt zwischen 5 und 250 g/m$^2$, sehr bevorzugt zwischen 30 und 100 g/m$^2$, beispielsweise 200 g/m$^2$ oder 50 g/m$^2$.

Vorteilhaft eingesetzte Trägerschichten (Trägerfolien, Trägervliese) haben eine Schichtdicke von 2 $\mu$m bis zu 200 $\mu$m, insbesondere von 4 $\mu$m bis zu 100 $\mu$m, besonders vorteilhaft von 6 $\mu$m bis 50 $\mu$m.

Als Trägerfolien können eine Vielzahl von Polymerfolien eingesetzt werden. So können zum Beispiel Polyesterfolien, wie Polyethylenterephthalatfolien (PET-Folien), eingesetzt werden. Es eignen sich zum Beispiel Folien der Firma Mitsubishi mit dem Handelsnamen Hostaphan™ oder der Firma Toray mit dem Handelsnamen Lumirror™. Weitere geeignete Polyesterfolien stellen die Polybutylenterephthalat-Folien dar.

Weiterhin lassen sich polyolefinische Folien, wie zum Beispiel aus Polyethylen (PE) oder Prolpropylen (PP) einsetzen, weiterhin auch Polyvinylchlorid-Folien (PVC-Folien). Weiterhin können Polycarbonat-, Polymethacrylat- oder Polystyrol-Folien eingesetzt werden. Auch Folien auf Basis von Copolymeren der Monomere, die als Basis der vorgenannten Polymere dienen, lassen sich einsetzen. So lassen sich beispielsweise zur Verringerung der Kristallisationsneigung Comonomere auf Basis von Styrol und einem oder mehreren Comonomere, wie zum Beispiel Butadien, einsetzen.

Weiterhin lassen sich auch Polyethersulfon- und Polysulfon-Filme als Trägermaterialien einsetzen. Diese sind zum Beispiel von der Firma BASF unter dem Tradenamen Ultrason™ E und Ultrason™ S erhältlich.

Im Sinne der Erfindung lassen sich auch Folien auf Urethan-Basis, beispielsweise auf Grundlage thermoplastischer Polyurethane (TPU-Folien), einsetzen. Diese sind zum Beispiel kommerziell erhältlich von der Firma Elastogran GmbH. Weiterhin lassen sich auch Polyamid- und Copolyamidfolien als Trägerschichten einsetzen, ebenso Folien auf Basis von Polyvinylalkohol und/oder Polyvinylbutyral einsetzen. Weiter geeignete Trägerfolien sind Folien auf Basis von Polyimid oder Polyethylennaphthalat.

Es können als Trägerschichten einschichtige Folien, aber auch mehrschichtige Folien eingesetzt, zum Beispiel mehrschichtige Folien, die mittels Coextrusion hergestellt werden. Hierfür können die zuvor genannten Polymermaterialien miteinander kombiniert werden. Des Weiteren kann es vorteilhaft sein, die Folien für ihren Einsatz als Trägerschicht ein- oder beidseitig zu behandeln (Vorbehandlung). So können zum Beispiel Bedampfungen vorgenommen sein, beispielsweise mit Zinkoxid, oder es könne Lacke oder Haftvermittler aufgetragen sein.

In vorteilhafter Vorgehensweise können die Trägerschichtmaterialien additiviert sein. Eine mögliche Additivierung stellen UV-Schutzmittel dar. Zusätzlich oder stattdessen können UBV-Schutzmittel auch als Schutzschicht aufgebracht sein. Die Dicke von Trägerfolien beträgt erfindungsgemäß bevorzugt zwischen 2 und 150 $\mu$m, besonders bevorzugt zwischen 12 und 100 $\mu$m, zum Beispiel 23 $\mu$m.

Auch Vliese lassen sich in günstiger Weise als Trägermaterialien einsetzen. Als Trägervliese werden Flächengebilde aus einzelnen Fasern verstanden. Dabei können alle nach der Norm DIN EN 29092 definierten Vliese eingesetzt werden. Das Vlies besteht aus lose zusammengelegten Fasern, welche noch nicht miteinander verbunden sind. Die Festigkeit resultiert aus der Faser-eigenen Haftung. Erhältlich sind verfestigte und nicht-verfestigte Vliese. Die Fasern sind statistisch verteilt. Die Vliese lassen sich nach den Fasermaterialien differenzieren. Als Fasermaterialien können - ohne sich technisch einschränken zu wollen - zum Beispiel mineralische Fasern, wie zum Beispiel Glas, Mineralwolle oder Basalt, tierische Fasern, wie zum Beispiel Seide oder Wolle, pflanzliche Fasern, wie zum Beispiel Baumwolle, chemische Fasern, wie zum Beispiel Zellulose, Polyamid, Polypropylen, Polyphenylensulfid, Polyacrylnitril, Polyimid, Polytetrafluorethylen, Aramid oder Polyester, eingesetzt werden. Die Fasern können mechanisch durch Vernadelung oder Wasserstrahlen verfestigt werden, chemisch durch Zugabe von Bindemitteln oder thermisch durch das Erweichen in einem geeignetem Gasstrom, zwischen beheizten Walzen oder auch in einem Dampfstrom.

Als Vliese werden in einer bevorzugten Vorgehensweise Vliese auf Polyester- oder Cellulose-Basis eingesetzt.

Die Wahl der Fasermaterialien erfolgt nach der Temperaturbeständigkeit. So werden für die Polymerbasierenden Fasern Polymere gewählt, deren Erweichungstemperatur bevorzugt mindestens 20°C, besonders bevorzugt mindestens 40°C oberhalb der Beschichtungstemperatur der Polyacrylatschmelze zum Zeitpunkt der Kontaktierung liegt.

In einer bevorzugten Auslegung der Erfindung werden Vliese auf Zellulosebasis eingesetzt. Das Flächengewicht der Vliese beträgt bevorzugt zwischen 4 und 100 $g/m^2$, besonders bevorzugt zwischen 10 und 70 $g/m^2$. Solche Vliese sind zum Beispiel kommerziell von der Firma Glatfelter erhältlich. Die Dicke dieser Vliese beträgt bevorzugt zwischen 20 und 200 $\mu$m, bevorzugt 30 bis 150 $\mu$m, beispielsweise 100 $\mu$m. Bei Beschichtung mit den jeweiligen Haftklebemassenschichten dringen diese in der Regel zu einem Teil in das Vlies ein.

Zum Schutz der offenen Haftklebemasse wird bevorzugt mit einer oder mehreren Trennfolien und/oder Trennpapieren abgedeckt.

Als Trennpapiere können zum Beispiel Glassine-, HDPE- oder LDPE-Trennpapiere (HDPE: Polyethylen hoher Dichte = Niederdruck-Polyethylen; LDPE: Polyethylen niedriger Dichte = Hochdruck-Polyethylen) eingesetzt werden, die jeweils bevorzugt eine Silikonisierung als Trennlage aufweisen.

Als Folienmaterialien für Trennfolien lassen sich typische Polymerfolien einsetzen, besonders bevorzugt Folien aus Polyester [zum Beispiel Polyethylenterephthalat (PET)] oder aus Polyolefin [zum Beispiel Polypropylen (PP), Monoaxial orientiertem Polypropylen (MOPP), Biaxial orientiertem Polypropylen (BOPP), Polyethylen (PE)] Folien eingesetzt. Die Trennfolie besitzt sehr bevorzugte eine Silikonisierung als Trennmittel.

Vernetzung

Vor dem Einsatz der zur Klebefolie ausgeformten Haftklebemassen, bevorzugt schon vor der Konfektionierung, werden diese zumindest zum Teil vernetzt. Die Vernetzung findet bei einer Temperatur unterhalb der Schmelztemperatur des zu vernetzenden Polyacrylats statt. In bevorzugter Weise ist das Vernetzer-Beschleuniger-System derart gewählt, dass eine Vernetzung bereits bei Raumtemperatur im Laufe der Zeit von selbst voranschreitet, ohne dass weitere aktive Zufuhr thermischer Energie notwendig ist. Es kann aber vorteilhaft sein, durch externe Energiezufuhr die Vernetzung zu beschleunigen. Durch die Wahl von Vernetzer und Beschleuniger lassen sich die Vernetzungs-Reaktionstemperatur und die Vernetzungsdauer wunschgemäß beeinflussen, ebenso auch der endgültig erreichbare Vernetzungsgrad. Auf letzteren hat beispielsweise auch die Zahl der funktionellen Gruppen des Polymergerüsts, die in die Vernetzungsreaktion involviert sind, einen Einfluss.

Für die erfindungsgemäße Verwendung zur Verklebung im Elektronikbereich werden die Klebefolien eingesetzt, wenn der Vernetzungsgrad (Gelwert) der Haftklebemasse mindestens 50 %, bevorzugt mindestens 60 % beträgt. In vorteilhafter Vorgehensweise sollte der Vernetzungsgrad mindestens 60, bevorzugt mindestens 75, besser mindestens 90 % des maximal erreichbaren Vernetzungsgrades betragen

Durch einen hinreichenden Vernetzungsgrad lässt sich die Qualität der Abdichtung und die Beständigkeit gegen Substanzen wie beispielsweise Sebum durch die erfindungsgemäß verwendete Klebefolie positiv beeinflussen.

Mit dem Anstieg der Vernetzungsgrades sinkt üblicherweise auch die Klebkraft ab. Dies kann auch von Vorteil sein, da das Haftklebeband dadurch nach der Applizierung wieder leichter entfernbar ist. Dies ist insbesondere bei Verklebung von sehr teuren Bauteilen von Vorteil. Bei falscher Platzierung des zu verklebenden Bauteils muss es nicht mehr komplett verworfen, sondern kann recycelt werden.

Besondere Verwendungsformen

Die erfindungsgemäße Verwendung bezieht sich besonders auf die Verklebung von Bauteilen oder Komponenten in elektronischen Konsumgüterartikeln. Dabei werden insbesondere Kunststoff-Kunststoff-Verklebungen, Kunststoff-Glas-Verklebungen, Glas-Metall-Verklebungen und/oder Kunststoff-Metall-Verklebungen realisiert. Die erfindungsgemäß verwendete Klebefolie hat sich für alle diese Verklebungen als geeignet herausgestellt.

Auch die Verklebung von Kunststoff, Glas oder Metall auf Lackoberflächen wird von der erfindungsgemäßen Verwendung umfasst, da eine Vielzahl lackierten Bauteilen (z.B. Gehäuse, Rahmen) in elektronischen Konsumgüterartikeln eingesetzt werden.

Besonders vorteilhaft ist die Verwendung für Verklebungen, bei denen ein Klebeverbund in elektronischen Geräten, insbesondere eine der vorgenannten Verklebungen, äußeren Staub-, Gas- oder Flüssigkeitseinflüssen ausgesetzt ist, da die Haftklebemasse hiergegen in unerwarteter Weise hervorragend eine hohe Beständigkeit aufweist und die Verklebung daher auch nach längerer Zeit nicht zum Wiederablösen neigt. Insbesondere vorteilhaft wird die erfindungsgemäße Verklebung im Datenanzeige-Bereich (Displaybereich) der elektronischen Geräte genutzt. Dabei ist besonders die Verwendung für Schutzscheiben ("Fenster") von - insbesondere portablen - Konsumgüterelektronikgeräten, insbesondere Schutzscheiben ("Fenster") für optischen Anzeigeeinheiten (Displays) von Interesse, da ein Ablösen der Verklebung sich bei derartigen Anzeigevorrichtungen nachteilig auswirkt (unschöne Erscheinungsform, Eintrübung der Sichtanzeige, Verschlechterung oder Verlust der Erkennbarkeit und ähnliche Effekte). Die erfindungsgemäße Klebefolie kann beispielsweise - unter anderem - zur Verklebung des eigentlichen Displays (zum Beispiel einer Flüssigkritallanzeigevorrichtung - LCD) selbst mit dem Gehäuse, des Displays mit dem Schutzfenster und/oder des Schutzfensters mit dem Gehäuse dienen.

Neben den vorstehend genannten Nachteilen kann es durch ein Eindringen von körperlichen Ausscheidungen in die Klebefuge auch zu hygienischen Problemen kommen. Eine sehr gute Beständigkeit der erfindungsgemäß verwendeten Haftklebemasse hat sich überraschend gegen derartige Substanzen, insbesondere Sebum (Schweiß und Schweißbestandteile), gezeigt. Hervorragend einsetzbar ist die erfindungsgemäße Haftklebemasse daher dort, wo elektronische Geräte diesen Substanzen vermehrt ausgesetzt sind, wie es etwa für tragbare elektronische Geräte und weiteren elektronischen Geräten, die in engem und/oder intensiven Körperkontakt betrieben werden, der Fall ist.

Beispielhaft seien hier genannt Mobiltelefone (Handys), Funkgeräte, Display-Vorrichtungen (Geräte und Vorrichtungen mit optischen Datenanzeige-Funktionen), Touchscreens und Touchpanels (berührungssensitive Bildschirme und Dateneingaben über Display-Oberflächen), Spielekonsolen, Fernbedienungen, elektronische Sportgeräte und Sportlerüberwachungsgeräte wie zum Beispiel Pulsmessgeräte, Computermäuse, Uhren wie zum Beispiel Armbanduhren, Computer, Klein- und Mikrocomputer [so genannte PDAs, Organizer, Laptops, E-Books (elektronische Lesecomputer), Tablet-PCs, Pocket-PCs, Handheld-PCs], insbesondere auch solche Klein- und Mikrocomputer zur persönlichen Termin- und/ oder Datenverwaltung, und dergleichen.

Die erfindungsgemäß verwendete doppelseitig klebrige Klebefolie erfüllt vorteilhaft zwei Funktionen: Zum einen bedingt sie eine möglichst hohe Adhäsion zwischen dem (insbesondere transparenten) Fenstermaterial (wie beispielsweise Glas, Polycarbonat oder dergleichen) und dem Gehäuse (beispielsweise Rahmen aus Kunststoff, Metall oder dergleichen). Zum anderen übt sie vorteilhaft eine Abdichtungsfunktion aus, damit keine Feuchtigkeit, Sebum, Staub oder dergleichen in den Klebeverbund eindringen kann.

Insbesondere bei Mobiltelefonen, bei denen der Nutzer das Gerät und auch das Datenanzeigefenster (den Displaybereich) für längere Zeit am Ohr hält, ist die Verklebungsstelle dem direkten Kontakt mit der Haut und dem direkten Einfluss des Sebums ausgesetzt. Ähnliche Überlegungen gelten für die anderen Geräte, die in direktem, engem und/oder intensiven Körperkontakt betrieben werden.

Die erfindungsgemäß eingesetzte Klebefolie wird für den erfindungsgemäßen Einsatz vorteilhaft in die für die Applikation gewünschte Form gebracht, insbesondere zugeschnitten und/oder ausgestanzt. Die Konfektionierung kann vor der Vernetzung der Haftklebemasse stattfinden, wird aber sehr bevorzugt durchgeführt, wenn die erfindungsgemäße Haftklebemasse zumindest zum Teil vernetzt ist. Konfektionierte (geschnittene, ausgestanzte, abgelängte und/oder anderweitig ausgeformte) Klebefolienstücke, insbesondere für die jeweilige Anwendung konfektionierte Klebefolienstücke, werden im Rahmen dieser Schrift auch als "Stanzlinge" bezeichnet. Für den Einsatz zur Verklebung von Anzeige-Fenstern auf Gehäusen im Bereich elektronischer Konsumgüterartikel werden insbesondere ringförmige Stanzlinge eingesetzt, wobei der Begriff "ringförmig" nicht auf runde Formen beschränkt ist, sondern zum Beispiel auch eckige (insbesondere viereckige, wie rechteckige und quadratische) Stanzlinge umfasst, sofern ein innerer Bereich der Klebefolienfläche ausgespart ist.

Figur 1 zeigt schematisch die Verklebung eines Schutzfensters (3) auf einem Gehäuse (1) eines elektronischen Gerätes mittels der im Rahmen dieser Schrift als erfindungsgemäß verwendet beschriebenen Klebefolie (Stanzling). Der Teil des Gehäuses (1), auf dem verklebt wird, stellt gewissermaßen den Rahmen für das Anzeigefenster dar.

In Figur 2 ist dargestellt, dass auch die Anzeigeeinheit (4) (eigentliches Display, zum Beispiel LCD) mittel eines erfindungsgemäßen Klebefolienstanzlings hervorragend verklebt werden kann. Es kann vorteilhaft sein, außerdem einen ringförmigen Schaumstoffstanzling (5), der insbesondere auch haftklebrig sein kann, zu verkleben. Dieser Schaumstoffstanzling (5) kann ebenfalls zur Abdichtung der Klebefuge dienen, aber auch zur Aufnahme mechanischer Energie bei Stößen und somit dem Erschütterungsschutz und der Verbesserung der Bruchfestigkeit dienen. Auch für sogenannte Touchscreens oder Touchpanels (berührungssensitive Datenanzeigen) können Schaumstoffstanzlinge verwendet werden, um den Abstand zwischen Schutzscheibe und Display mechanisch überwinden zu können und somit die Berührungssensitivität zu gewährleisten. Für Tochscreens und -panels werden in der Regel mechanisch flexible Schutzfensterscheiben verklebt, so dass der mechanische Kontakt auf die Displayeinheit übertragen werden kann.

Die Schaumstoffschicht kann - wie in Figur 2 dargestellt - zwischen dem Klebefolienstanzling und dem Gehäuse vorgesehen sein, und/oder zwischen dem Display und dem Klebefolienstanzling.

Figur 3 zeigt schematisch eine Datenanzeigevorrichtung, bei dem sowohl die Schutzscheibe (3) als auch das Display mittels eines erfindungsgemäßen Klebefolienstanzlings (2a, 2b) verklebt sind. Auch hier ist die Anwesenheit einer Schaumstoffschicht (5) optional und nicht zwingend.

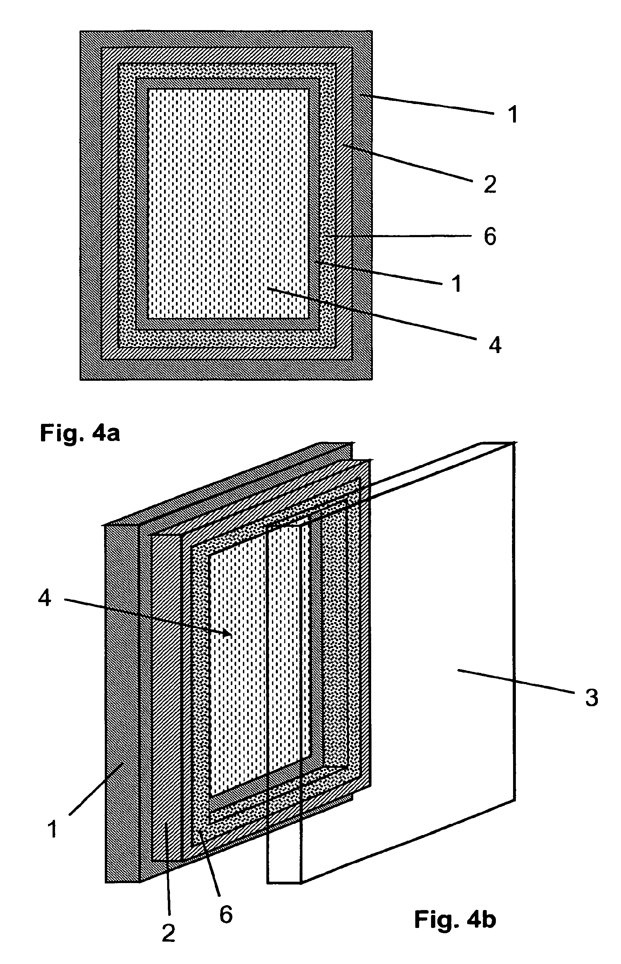

Eine weitere vorteilhafte Ausführung der erfindungsgemäßen Verwendung zeichnet sich dadurch aus, dass zwei - insbesondere ringförmige - Stanzlinge eingesetzt werden, vgl. hiezu beispielsweise Figuren 4a und 4b Die Figuren 4a und 4b zeigt schematisch und nicht maßstabsgetreu einen Rahmen (1), der beispielsweise aus Kunststoff oder aus Metall gefertigt ist. Unter der Rahmeneinheit (1) ist eine Anzeigeeinheit (4) (Display, zum Beispiel LCD) angeordnet. Zum Schutz dieser Anzeigevorrichtung soll eine transparente Schutzscheibe (3) (zum Beispiel aus Glas oder einem transparenten Kunststoff, wie Polycarbonat oder dergleichen) verklebt werden (in der Aufsicht (Fig. 4a) ist die transparente Scheibe nicht dargestellt, in der perspektivischen Zeichnung (Fig. 4b) wird die noch nicht verklebte Scheibe schematisch gezeigt).

Um das Display (4) herum sind ringförmig zwei Klebefolienstanzlinge (2, 6) angeordnet (in der Zeichnung rechteckig dargestellt, wobei die erfinderische Lehre durch die gezeigte Form der Stanzlinge nicht beschränkt werden soll; diese kann insbesondere der Form des Displays und/oder des Rahmens angepasst sein) und auf dem Rahmen (1) verklebt, nämlich ein äußerer Stanzling (2) und ein innerer Stanzling (6). Die Klebefolienstanzlinge 2 und 6 können sich in ihrer Funktion unterscheiden: Der äußere Stanzling besteht vorteilhaft aus der in dieser Schrift als erfindungsgemäß beschrieben Klebefolie und übernimmt bevorzugt neben der Klebewirkung eine Abdichtung der Klebefuge, während der innere Stanzling (6) vorteilhaft ein solcher ist, dass er eine hohe Verklebungsfestigkeit bewirkt, und insbesondere auf einer starkklebrigen (hochtackigen) Haftklebemasse beruht.

Zum Verkleben wird die transparente Scheibe (3) auf die Klebefolienstanzlinge (2, 6) aufgedrückt.

Die Verklebung des Displays (4) auf dem Rahmen (1) ist in dieser Darstellung nicht gezeigt.

Ein derartiges System aus zwei Klebefolienstanzlingen, von denen der eine - insbesondere der außenliegende - eine insbesondere abdichtende Funktion aufweist und der andere - insbesondere der innen liegende - insbesondere zur Erzielung starker Klebkräfte genutzt wird, bietet sich ebenfalls zur Verklebung des eigentlichen Displays mit dem Gehäuse (auf dem Rahmen) und/oder auf der Schutzscheibe an.

Dabei können die Stanzlinge jeweils auch zur Funktion des anderen Stanzlings beitragen, insbesondere dient auch der abdichtende Stanzling zur Verklebung der Substrate.

Auch im Falle zweier verwendeter Klebefolienstanzlinge kann optional zwischen den Klebefolienstanzlingen und der transparenten Scheibe und/oder zwischen den Klebefolienstanzlingen und dem Rahmen eine bzw. jeweils eine Schaumschicht vorgesehen sein.

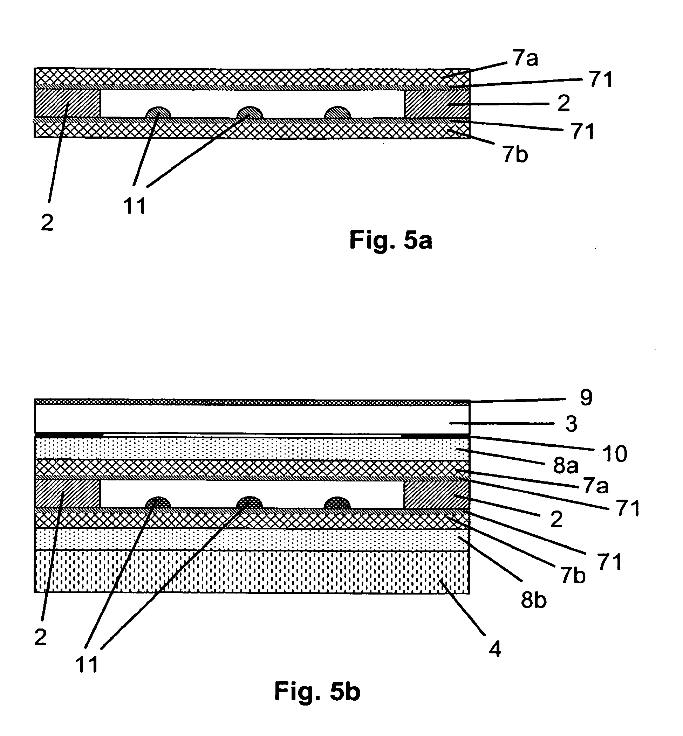

Eine weitere vorteilhafte erfindungsgemäße Verwendung ist in Figur 5a dargestellt, bei der die erfindungsgemäße Klebefolie 2 bei der Verklebung innerhalb einer berührungssensitiven Anzeigevorrichtung eingesetzt wird. Hier dient der Klebefolienstanzling 2 zur Verklebung zweier leitfähiger, beispielsweise mit ITO (71) (Indiumzinnoxid) beschichteter Folien (7a, 7b) (zum Beispiel Polyethylenterephthalatfolien), zusätzlich als Abstandhalter ("Spacer Tape"-Funktion), um eine Signalerzeugung bei Nicht-Berührung der Oberfläche zu vermeiden. Zusätzliche mechanische Abstandhalter (11) können vorgesehen sein. Die obere mit ITO (71) beschichtete Folie (7a) ist flexibel und kann durch Druck an den Druckstellen in Kontakt mit der unteren leitfähigen Folie (7b) gebracht werden, wodurch ein elektrisches Signal erzeugt wird (dabei kann der Druck durch Berührung mit dem Finger, einem Stift oder anderweitig ausgeübt werden).

Die Figur 5b zeigt beispielhaft, wie eine solche Einheit in eine berührungssensitive Anzeigevorrichtung (Touchscreen, Touchpanel) integriert sein kann: Der vorstehend geschilderte Aufbau wird mithilfe insbesondere transparenter (optisch klarer) insbesondere einschichtiger Klebefolien (8b) zum auf einem Untergrund, insbesondere auf einem Display (4), verklebt, so dass hier die optische Bilderzeugung erfolgen kann. Zum mechanischen Schutz kann auf der Oberseite der Anzeigevorrichtung eine Schutzscheibe (3) vorgesehen sein, die eine hinreichende Flexibilität aufweist, um die Signalerzeugung zu ermöglichen. Auch diese Schutzscheibe (3) ist mithilfe einer transparenten insbesondere einschichtigen Klebefolie (8a) verklebt. Auf der Schutzscheibe kann zusätzlich eine kratzfeste Schutzschicht (9) angeordnet sein, um ihrerseits die flexible Schutzscheibe (3) zu schützen. Unterhalb der flexiblen Schutzschicht können lokale Rückseitenbeschichtungen (10) zur Vermeidung unbeabsichtigten Lichtaustritts vorgesehen sein.

Auch derartige berührungssensitive Anzeigeeinheiten sind der intensiven Berührung und daher dem starken Einfluss durch Sebum ausgesetzt.

Parameterdefinitionen

Die im Rahmen dieser Schrift angegebenen Parameter und Parameterwerte beziehen sich auf die folgenden Bestimmungsmethoden:

Vernetzungsgrad (Gelwert GW)

Die vernetzten, lösungsmittelfreien Haftklebemassenproben (Lösemittelanteil < 0,2 %) werden in ein Vliestütchen aus Polyethylen (Tyvek-Vlies) eingeschweißt. Lösliche und somit nicht vernetzte Bestandteile werden mit Toluol über eine Dauer von drei Tagen unter täglichem Lösungsmittelaustausch extrahiert.

Aus den Probengewichten (Reingewicht der Proben ohne Vliestütchen) vor der Extraktion (Gewicht der gesamten Haftklebemasse $G_v$) und nach der Extraktion (Gewicht des vernetzten Anteils $G_n$) wird der Gelwert als prozentuale Angabe des Gewichtsanteils des Polymers, das nicht mit Toluol extrahierbar ist, bestimmt zu

$$GW = (G_n/G_v) * 100 \%$$

Der Gelwert GW kann als Maßzahl des Vernetzungsgrades verstanden werden. Alle Angaben zum Vernetzungsgrad in dieser Schrift beziehen sich auf den Gelwert nach der vorstehend genannten Bestimmungsmethode.

Gelpermeationschromatographie GPC:

Die Angaben des gewichtsmittleren Molekulargewichtes $M_w$ und der Polydispersität PD in dieser Schrift beziehen sich auf die Bestimmung per Gelpermeationschromatographie. Die Bestimmung erfolgt an 100 $\mu$l klarfiltrierter Probe (Probenkonzentration 4 g/l). Als Eluent wird Tetrahydrofuran mit 0,1 Vol.-% Trifluoressigsäure eingesetzt. Die Messung erfolgt bei 25 °C. Als Vorsäule wird eine Säule Typ PSS-SDV, 5 $\mu$, $10^3$ Å, ID 8,0 mm x 50 mm verwendet. Zur Auftrennung werden die Säulen des Typs PSS-SDV, 5 $\mu$, $10^3$ Å sowie $10^5$ Å und $10^6$ Å mit jeweils ID 8,0 mm x 300 mm eingesetzt (Säulen der Firma Polymer Standards Service; Detektion mittels Differentialrefraktometer Shodex RI71). Die Durchflussmenge beträgt 1,0 ml pro Minute. Die Kalibrierung erfolgt gegen PMMA-Standards (Polymethylmethacrylat-Kalibrierung)].

## **Experimenteller Teil**

Die folgenden beispielhaften Experimente sollen die Erfindung näher erläutern, ohne dass durch die Wahl der angegebenen Beispiele die Erfindung unnötig eingeschränkt werden soll.

Messmethoden:

Die folgenden Messmethoden diesen zur Charakterisierung der untersuchten Proben:

180° Klebkrafttest (Messmethode H1):

Ein 20 mm breiter Streifen einer auf Polyester als Schicht aufgetragenen Acrylathaftklebemasse wurde auf Stahlplatten aufgebracht, die zuvor zweimal mit Aceton und einmal mit Isopropanol gewaschen wurden. Der Haftklebestreifen wurde zweimal mit einem Anpressdruck entsprechend einem Gewicht von 2 kg auf das Substrat aufgedrückt. Der Haftklebestreifen wurde anschließend sofort mit einer Geschwindigkeit von 300 mm/min und in einem Winkel von 180 ° vom Substrat abgezogen. Alle Messungen wurden bei Raumtemperatur durchgeführt.
Die Messergebnisse sind in N/cm angegeben und sind gemittelt aus drei Messungen.

Durchstoßfestigkeit (Messmethode H2):

Eine PMMA Platte mit 1 mm Dicke, 45 mm Länge und 35 mm Breite wird auf einen ABS Rahmen mit den Außendimensionen von 50 mm Länge und 40 mm Breite bei einer Dicke von 3 mm verklebt. Der ABS Rahmen ist zentral innen mit den Dimensionen 25 mm x 35 mm ausgeschnitten, so dass Platz für einen Ausstoßstempel zur Verfügung steht. Der erfinderischen Haftklebebänder werden als Stanzlinge zur Verklebung eingesetzt. Die Außendimensionen des Stanzlings betragen 46 mm x 36 mm. Die Stegbreite zu allen Seiten beträgt 2 mm. Die Verklebungsfläche beträgt 304 mm$^2$. Die Verklebung wird mit einem Druck von 5 kg für 6 s durchgeführt. Anschließend wird für 24 Stunden bei 23°C und 50 % Luftfeuchtigkeit konditioniert. Der Ausstoßtest wird mit einer Zwickprüfmaschine durchgeführt. Die Ausstoßung erfolgt durch den ABS Rahmen und das Fenster wird mittig ausgedrückt. Der Ausdruckstempel weist die Dimensionen 20 mm x 26 mm auf. Die Ausstoßgeschwindigkeit beträgt 10 mm/min und der Test wird bei 23 °C und 50 % Luftfeuchtigkeit durchgeführt. Die maximal gemessene Kraft wird in N / 304 mm$^2$ angegeben. Die gemessenen Werte sind Durchschnittswerte aus 3 Messungen.

Sebumbeständigkeitstest (Messmethode H3):

Die Probenvorbereitung erfolgt analog Messmethode H2. Nach der Konditionierung für 24 Stunden bei 23 °C und 50 % Feuchtigkeit erfolgt die Einlagerung unter Sebum. Als menschlicher Sebumersatz wird ein künstliches Sebum der folgenden Zusammensetzung:

41,0 % Triglyceride, 25,0 % Wachsester,16,0 % Fettsäuren, 13,0 % Squalen, 1,0 % Diglyceride, 2,0 % Cholesterinester, 2,0 % Cholesterin

eingesetzt (Angaben jeweils Massengehalt)

Die Einlagerung erfolgt unter 60 °C. Die Proben werden vollständig am Rand mit Sebum benetzt, so dass Sebum im großen Überschuss vorhanden ist. Die Auftragung kann mit einem Pinsel erfolgen. Die Einlagerung bei 60 °C läuft 7 Tage. Anschießend wird - in Analogie zu Messmethode H2 - wiederum der Ausstoßtest durchgeführt. Die Ausstoßgeschwindigkeit beträgt 10 mm/min, und der Test wird bei 23 °C und 50 % Luftfeuchtigkeit durchgeführt. Die maximal gemessene Kraft wird in N / 304 mm$^2$ angegeben. Die gemessenen Werte sind Durchschnittswerte aus 3 Messungen.

| Kommerziell erhältliche, eingesetzte Chemikalien | | | |
|---|---|---|---|
| *Chemische Verbindung* | *Handelsname* | *Hersteller* | *CAS-Nr.* |
| Bis-(4-tert-butylcyclohexyl)peroxydicarbonat | Perkadox® 16 | Akzo Nobel | 15520-11-3 |
| Klebharz auf Terpen-Phenolbasis (Erweichungspunkt 110 °C, Hydroxylwert 45-60) | Dertophene® T110 | DRT, Frankreich | 73597-48-5 |
| Pentaerythrittetraglycidether | Polypox® R16 | UPPC AG | 3126-63-4 |
| Triethylentetramin | Epikure® 3234 Epikure ® 925 | Hexion Speciality Chemicals | 112-24-3 |
| Isopropyliertes Triarylphosphat | Reofos® 65 | Great Lakes, USA | 68937-41-7 |
| Diethylentriamin | Epikure® 3223 | Hexion Speciality Chemicals | 111-40-0 |
| Trimethylolpropantriglycidether | Polypox® R20 | UPPC AG | 30499-70-8 |
| Trimethylhexamethylendiamin | Epikure® 940 | Hexion Speciality Chemicals | 25620-58-0 |
| 2,2'-Azobis(2-methylpropionitril), AIBN | Vazo® 64 | DuPont | 78-67-1 |
| alle Spezifikationsangaben bei 20 °C; Epikure® auch vertrieben unter den Handelsbezeichnungen Epi-Cure® und Bakelite® EPH | | | |

<u>Beispiele Haftkleber</u>

<u>Herstellung der Ausgangspolymere für die Beispiele PSA B1 bis B8</u>

Im Folgenden wird die Präparation der Ausgangspolymere beschrieben. Die untersuchten Polymere werden konventionell über eine freie radikalische Polymerisation in Lösung hergestellt.

<u>Basispolymer P1</u>

Ein für radikalische Polymerisationen konventioneller Reaktor wurde mit 45 kg 2-Ethylhexylacrylat, 45 kg n-Butylacrylat, 2 kg Methylacrylat, 8 kg Acrylsäure und 66 kg Aceton/Isopropanol (92,5:7,5) befüllt. Nach 45minütiger Durchleitung von Stickstoffgas unter Rühren wurde der Reaktor auf 58 °C hochgeheizt und 50 g AIBN hinzugegeben. Anschließend wurde das äußere Heizbad auf 75 °C erwärmt und die Reaktion konstant bei dieser Außentemperatur durchgeführt. Nach 1 h wurden erneut 50 g AIBN zugegeben und nach 4 h wurde mit 20 kg Aceton/Isopropanol Gemisch verdünnt.
Nach 5 sowie nach 7 h wurde jeweils mit 150 g Bis-(4-tert-butylcyclohexyl)-peroxydicarbonat nachinitiiert. Nach 22 h Reaktionszeit wurde die Polymerisation abgebrochen und auf Raumtemperatur abgekühlt. Das Polyacrylat hat ein mittleres Molekulargewicht von Mw = 602.000 g/mol, Polydispersität PD (Mw/Mn) = 8,1.

<u>Basispolymer P2</u>

Analog Beispiel P1 wurden 90 kg 2-Ethylhexylacrylat und 10 kg Acrylsäure in 66 kg Aceton/Isopropanol (92,5:

7,5) polymerisiert.
Das Polyacrylat hat ein mittleres Molekulargewicht von Mw = 633.000 g/mol, Polydispersität PD (Mw/Mn) = 7,9.

Verfahren 1: Aufkonzentration / Herstellung der Schmelzhaftkleber:

Die Acrylatcopolymere (Basispolymere P1 bis P2) werden mittels Einschneckenextruder (Aufkonzentrationsextruder, Berstorff GmbH, Deutschland) weitestgehend vom Lösemittel befreit (Restlösemittelgehalt s 0,3 Gew.-%; vgl. bei den einzelnen Beispielen). Exemplarisch sind hier die Parameter der Aufkonzentration des Basispolymeren P1 dargestellt. Die Drehzahl der Schnecke betrug 150 U/min, der Motorstrom 15 A, es wurde ein Durchsatz von 58,0 kg flüssig/h realisiert. Zur Aufkonzentration wurde an 3 verschiedenen Domen ein Vakuum angelegt. Die Unterdrücke betrugen jeweils zwischen 20 mbar und 300 mbar. Die Austrittstemperatur des aufkonzentrierten Hotmelts liegt bei ca. 115 °C. Der Feststoffgehalt betrug nach diesem Aufkonzentrationsschritt 99,8%.

Verfahren 2: Herstellung der modifizierten Schmelzhaftkleber

Die nach dem oben erläuterten Verfahren 1 hergestellten Acrylatschmelzhaftkleber wurden direkt in einen nachgeschalteten WELDING-Doppelschneckenextruder (WELDING Engineers, Orlando, USA; Model 30 MM DWD; Schneckendurchmesser 30mm, Länge Schnecke 1 = 1258 mm; Länge Schnecke 2 = 1081 mm; 3 Zonen) gefördert. Über ein Feststoffdosiersystem wurde das Harz Dertophene® DT110 in Zone 1 zudosiert und homogen eingemischt. Exemplarisch sind hier für die Harzcompoundierung mit dem Basispolymer P1 die Parameter dargelegt. Drehzahl betrug 451 U/min, der Motorstrom 42 A, es wurde ein Durchsatz von 30,1 kg/h realisiert. Die Temperaturen der Zonen 1 und 2 betrugen jeweils 105 °C, die Schmelzetemperatur in Zone 1 betrug 117°C und die Massetemperatur bei Austritt (Zone 3) bei 100°C.

Verfahren 3: Herstellung der erfindungsgemäßen Klebebänder, Abmischung mit dem Vernetzer-Beschleuniger-System für die thermischen Vernetzung und Beschichtung

Die nach den Verfahren 1 - 2 hergestellten Acrylatschmelzhaftkleber wurden in einem Fütterextruder (Einschneckenförderextruder der Firma TROESTER GmbH & Co KG, Deutschland) aufgeschmolzen und mit diesem als Polymerschmelze in einen Doppelschneckenextruder gefördert (Fa. LEISTRITZ, Deutschland, Bez. LSM 30/34. Das Aggregat wird von außen elektrisch beheizt und über verschiedene Gebläse luftgekühlt und ist so konzipiert, dass bei guter Verteilung des Vernetzer-Beschleuniger-Systems in der Polymermatrix gleichzeitig eine kurze Verweilzeit der Klebmasse im Extruder gewährleistet ist. Dazu wurden die Mischwellen des Doppelschneckenextruders so angeordnet, dass sich fördernde und mischende Elemente abwechseln. Die Zugabe der jeweiligen Vernetzer und Beschleuniger erfolgt mit geeignetem Dosierequipment gegebenenfalls an mehreren Stellen (Fig.1: Dosierstellen 1.1 und 1.2) und gegebenenfalls unter Verwendung von Dosierhilfsmitteln in die druckfreien Förderzonen des Doppelschneckenextruders. Nach Austritt der fertig compoundierten, d.h. mit dem Vernetzer-Beschleuniger-System abgemischten Klebmasse aus dem Doppelschneckenextruder (Austritt: Runddüse, 5 mm Durchmesser), erfolgt die Beschichtung nach Fig.1 auf ein bahnförmiges Trägermaterial. Die Zeit zwischen Zudosierung des Vernetzer-Beschleuniger-Systems bis zum Ausformen bzw. Beschichten wird als Verarbeitungszeit bezeichnet. Die Verarbeitungszeit gibt den Zeitraum an, in welcher die mit dem Vernetzer-Beschleuniger-System abgemischte Klebmasse mit optisch gutem Strichbild (gelfrei, stippenfrei) beschichtet werden kann. Die Beschichtung erfolgt mit Bahngeschwindigkeiten zwischen 1 m/min und 20 m/min, die Rakelwalze des 2-Walzenauftragswerks wird nicht angetrieben.
In den nachfolgenden Beispielen und in den Tab.1 bis Tab.3 werden die eingesetzten Formulierungen, die Herstellparameter und die erzielten Eigenschaften jeweils näher beschrieben.

Beispiel B1

Das Basispolymer P1 wird gemäß dem beschriebenen Polymersationsverfahren polymerisiert, gemäß Verfahren 1 aufkonzentriert (Feststoffgehalt 99,8 %) und anschließend gemäß Verfahren 2 mit Harz Dertophene® T110 abgemischt. Diese harzmodifizierte Acrylat-Hotmeltmasse wurde dann gemäß Verfahren 3 kontinuierlich mit dem Vernetzer-Beschleuniger-System bestehend aus einem

- Pentaerthrittetraglycidether,
  hier Polypox® R16 der Fa. UPPC AG, Deutschland (Epoxid)
  und einem
- Triethylentriamin,
  hier Epikure® 3234 der Fa. HEXION, Deutschland (Aminbeschleuniger) compoundiert.

Detaillierte Beschreibung: In dem in Verfahren 3 beschriebenen Doppelschneckenextruder wurde ein Gesamtmassestrom bestehend aus 70 Teilen Polymer P1 und 30 Teilen Harz Dertophene® T110 von 533,3 g/min (das entspricht 373 Gramm des reinen Polymers pro Minute) mit 1,16 g/min des Epoxidvernetzers Pentaerythrittetraglycidether (entspricht 0,32 Gew.-% auf Polymer) und 1,89 g/min des Aminbeschleunigers Triethylentetramin (entspricht 0,51 Gew.-% auf Polymer) abgemischt. Die Dosierung des Amins und des Epoxids erfolgt separat über zwei Schlauchpumpen an Dosierstelle 1.1 (sieh Fig.1). Zur Verbesserung der Dosierfähigkeit und der erreichbaren Mischgüte wurde das verwendete Vernetzersystem mit dem flüssigen Phophatester (Isopropyliertes Triarylphosphat; Reofos 65; Fa. GREAT LAKES, USA) verdünnt (Verhältnis zum Vernetzer 0,5:1). Die Prozessparameter sind in Tab. 2 zusammengefasst.

Die Verarbeitungszeit des fertigen Compounds war größer 7 min bei einer durchschnittlichen Massetemperatur von 125 °C nach dem Verlassen des LEISTRITZ-Doppelschneckenextruders. Die Beschichtung erfolgt an einem 2-Walzenauftragswerk bei Walzenoberflächentemperaturen von jeweils 100 °C und einem Masseauftrag von 100 g/m$^2$ auf 12 $\mu$m PET-Folie. Die PET Folie wurde beidseitig mit jeweils 100 g/m$^2$ Acrylathaftklebemasse beschichtet.

Beispiel B2

Es wurde analog B1 vorgegangen. Das gemäß Verfahren 1 aufkonzentrierte und gemäß Verfahren 2 mit Harz Dertophene® T110 abgemischte Basispolymer P1 (Restlösemittelanteil: 0,1 Gew.-%) wurde analog Beispiel B1 nach Verfahren 3 im Doppelschneckenextruder mit dem Vernetzer-Beschleuniger-System compoundiert und beschichtet. Die Beschichtung erfolgte auf eine 12 $\mu$m PET Trägerfolie. Die Beschichtung erfolgte beidseitig und der Masseauftrag auf beiden Seiten betrug jeweils 75 g/m$^2$.

Beispiel B3

Es wurde analog B1 vorgegangen. Das gemäß Verfahren 1 aufkonzentrierte und gemäß Verfahren 2 mit Harz Dertophene® T110 abgemischte Basispolymer P1 (Restlösemittelanteil: 0,1 Gew.-%) wurde analog Beispiel B1 nach Verfahren 3 im Doppelschneckenextruder mit dem Vernetzer-Beschleuniger-System compoundiert und beschichtet. Die Beschichtung erfolgte auf eine 50 $\mu$m PET Trägerfolie. Die Beschichtung erfolgte beidseitig und der Masseauftrag auf beiden Seiten betrug jeweils 100 g/m$^2$.

Beispiel B4

Es wurde analog B1 vorgegangen. Das gemäß Verfahren 1 aufkonzentrierte und gemäß Verfahren 2 mit Harz Dertophene® T110 abgemischte Basispolymer P1 (Restlösemittelanteil: 0,1 Gew.-%) wurde analog Beispiel B1 nach Verfahren 3 im Doppelschneckenextruder mit dem Vernetzer-Beschleuniger-System compoundiert und beschichtet. Die Beschichtung erfolgte auf eine 12 $\mu$m PET Trägerfolie. Die Beschichtung erfolgte beidseitig und der Masseauftrag auf beiden Seiten betrug jeweils 20 g/m$^2$.

Beispiel B5

Es wurde analog B1 vorgegangen. Das gemäß Verfahren 1 aufkonzentrierte und gemäß Verfahren 2 mit Harz Dertophene® T110 abgemischte Basispolymer P1 (Restlösemittelanteil: 0,1 Gew.-%) wurde analog Beispiel B1 nach Verfahren 3 im Doppelschneckenextruder mit dem Vernetzer-Beschleuniger-System compoundiert und beschichtet. Die Beschichtung erfolgte auf ein 13 g/m$^2$ Vlies (Teebeutel Vlies der Firma Glatfelter, Cellulose Basis). Die Beschichtung erfolgte beidseitig und der Masseauftrag auf beiden Seiten betrug jeweils 75 g/m$^2$.

Beispiel B6

Das gemäß Verfahren 1 aufkonzentrierte und gemäß Verfahren 2 mit Harz Dertophene® T110 abgemischte Basispolymer P2 (Restlösemittelanteil: 0,1 Gew.-%) wurde analog Beispiel B1 nach Verfahren 3 im Doppelschneckenextruder mit dem Vernetzer-Beschleuniger-System compoundiert und beschichtet.
Das Vernetzer-Beschleuniger-System besteht aus

- Trimethylolpropantriglycidether,
  hier Polypox® R20, Fa. UPPC AG, Deutschland (Epoxid) und
- Diethylentriamine,
  hier Epikure® 3223, Fa. HEXION, Deutschland (Aminbeschleuniger).

Analog Beispiel B1 wurden 1,04 Gew.-% des multifunktionellen Epoxides Trimethylolpropantriglycidether und 0,58 Gew.-

% des Amins Diethylentriamin (jeweils bezogen auf Acrylatcopolymer) gemäß Verfahren 3 zugesetzt. Die Extruderdrehzahl des LEISTRITZ-Doppelschneckenextruders betrug 125 Umdrehungen pro Minute, der Massedurchsatz 16,4 kg/h. Die Verarbeitungszeit betrug mehr als 5 min bei einer effektiven Massetemperatur von 108 °C nach dem Verlassen des Extruders. Mittels Walzenauftragswerk wurden mit einem Masseauftrag von 100 g/m$^2$ auf 12 μm PET-Folie beschichtet.

Beispiel B7

Es wurde analog B6 vorgegangen. Das gemäß Verfahren 1 aufkonzentrierte und gemäß Verfahren 2 mit Harz Dertophene® T110 abgemischte Basispolymer P2 (Restlösemittelanteil: 0,1 Gew.-%) wurde analog Beispiel B6 nach Verfahren 3 im Doppelschneckenextruder mit dem Vernetzer-Beschleuniger-System compoundiert und beschichtet. Die Beschichtung erfolgte auf ein 13 g/m$^2$ Vlies (Teebeutel Vlies der Firma Glatfelter, Cellulose Basis). Die Beschichtung erfolgte beidseitig und der Masseauftrag auf beiden Seiten betrug jeweils 75 g/m$^2$.

Referenzbeispiel RB1

Als Basispolymer wurde das Polymer P1 eingesetzt. Das Polymer wurde mit 30 Gew.-% Dertophene® T110 und 0.25 Gew.-% Aluminium-(III)-acetylacetonat abgemischt. Zuvor wurde mit Isopropanol ein Feststoffgehalt von 30 % eingestellt. Anschließend erfolgte die Beschichtung aus Lösung auf eine 12 μm PET Folie. Das Muster wurde für 10 Minuten bei 120°C getrocknet. Der Masseauftrag nach dem Trocknen betrug 100 g/m$^2$. Anschließend wurde die offene Seite der so erhaltenen Klebefolie mit einem Trennpapier abgedeckt. Zu letzt wurde wiederum die andere Seite der PET Folie mit der Klebemasse beschichtet und für 10 Minuten bei 120°C getrocknet. Der Masseauftrag nach dieser Beschichtung betrug ebenfalls 100 g/m$^2$.

Referenzbeispiel RB2

Es wurde analog RB 1 vorgegangen. In diesem Fall wurde die 12 μm PET Folie beidseitig mit jeweils 75 g/m$^2$ Klebemasse auf Basis Polymer 1 vorgegangen.

Referenzbeispiel RB3

Es wurde analog RB 1 vorgegangen. In diesem Fall wurde eine 50 μm dicke PET Folie beidseitig mit jeweils 100 g/m$^2$ Klebemasse auf Basis Polymer 1 vorgegangen.

Referenzbeispiel RB4

Es wurde analog RB 1 vorgegangen. In diesem Fall wurde eine 12 μm dicke PET Folie beidseitig mit jeweils 100 g/m$^2$ Klebemasse auf Basis Polymer 2 vorgegangen. Auch in diesem Fall wurde das Polymer 2 mit 30 Gew.-% Dertophene® T110 und 0.45 Gew.-% Aluminium-(III)-acetylacetonat abgemischt

Ergebnisse

Zur Bestimmung der klebtechnischen Eigenschaften wurde zunächst die 180° Klebkraft auf Stahl bestimmt. Hierbei wurde nach Testmethode H1 vorgegangen.
Die klebtechnischen Eigenschaften sind in Tabelle 1 zusammengefasst.

Tabelle 1: Klebtechnische Eigenschaften der Beispiele und Gelwertbestimmung

| Beispiel | Klebkraft Stahl, Testmethode H1, [N/cm] | Gelwert, Testmethode Vernetzungsgrad [%] |
|---|---|---|
| **B1** | 11,5 | 62 |
| **B2** | 10,2 | 60 |
| **B3** | 13,4 | 64 |
| **B4** | 7,3 | 63 |
| **B5** | 10,9 | 62 |
| **B6** | 10,7 | 71 |
| **B7** | 11,0 | 73 |

(fortgesetzt)

| Beispiel | Klebkraft Stahl, Testmethode H1, [N/cm] | Gelwert, Testmethode Vernetzungsgrad [%] |
|---|---|---|
| **RB1** | 11,3 | 40 |
| **RB2** | 10,3 | 44 |
| **RB3** | 13,7 | 42 |
| **RB4** | 10,5 | 65 |

Aus der Tabelle 1 kann entnommen werden, dass die erfinderischen Beispiele B1 bis B7 alle hohe Klebkräfte in Abhängigkeit vom Träger und vom Masseauftrag aufweisen. Die Referenzbeispiele zeigen - in Analogie zu den erfinderischen Beispielen - ähnliche Klebkräfte. So zeigt der Vergleich von B1 mit RB1, von B2 mit RB2, von B3 mit RB3 und von B6 mit RB6 vergleichbare Klebkräfte. Dies ist nicht überraschend, da die gleichen Basispolymere eingesetzt werden sowie jeweils die Produkte mit dem gleichen Produktaufbau miteinander verglichen werden. Weiterhin zeigen die gemessenen Gelwerte, dass die erfinderischen Beispiele B1 - B7 alle Gelwerte größer 60 % aufweisen. Die Referenzbeispiele RB1 - RB3 besitzen dagegen geringere Gelwerte um die 40 %. Mit RB 4 wurde weiterhin ein Referenzbeispiel ausgewählt, welches auch einen hohen Gelwert besitzt, aber nicht nach dem bestimmten Verfahren hergestellt wurde. Dieses Muster weist einen Gelwert von 65 % auf.

Neben der Klebkraft wurde auch ein Durchstoßtest nach Methode H2 durchgeführt. Mit diesem Test wird das Fenster eines Mobilfunktelefons simuliert. Auch wird in dieser Industrie üblicher Weise ein Durchstoßtest durchgeführt um zu prüfen, wie fest das Fenster im Mobilfunkgehäuse verklebt ist. Die Messwerte sind in folgender Tabelle 2 zusammengefasst.

Tabelle 2: Durchstoßfestigkeit der Beispiele

| Beispiel | Durchstoßfestigkeit, Testmethode H2, [N/304 mm$^2$] |
|---|---|
| **B1** | 105 |
| **B2** | 102 |
| **B3** | 108 |
| **B4** | 67 |
| **B5** | 98 |
| **B6** | 117 |
| **B7** | 103 |
| **RB1** | 102 |
| **RB2** | 106 |
| **RB3** | 110 |
| **RB4** | 115 |

Aus der Tabelle 2 kann entnommen werden, dass die erfinderischen Beispiele B1 bis B7 alle Beispiele hohe Durchstoßfestigkeiten in Abhängigkeit vom Träger und vom Masseauftrag aufweisen. Die Referenzbeispiele zeigen - in Analogie zu den erfinderischen Beispielen - ähnliche Durchstoßfestigkeiten. So zeigt der Vergleich von B1 mit RB1, von B2 mit RB2, von B3 mit RB3 und von B6 mit RB6 vergleichbare Durchstoßfestigkeiten. Dies ist nicht überraschend, da die gleichen Basispolymere eingesetzt werden sowie jeweils die Produkte mit dem gleichen Produktaufbau miteinander verglichen werden.

Nachdem gezeigt wurde, dass sowohl die erfinderischen Beispiele als auch die Referenzbeispiele prinzipiell für Fensterverklebungen geeignet sind, wurden Sebumbeständigkeitstests durchgeführt. Dieser Test wurde wiederum mit dem Durchstoßtest kombiniert um zu prüfen, ob durch das Sebum die Verklebungsfestigkeit abnimmt. Die Ergebnisse dieser Untersuchungen sind in Tabelle 3 dargestellt.

Tabelle 3: Durchstoßfestigkeit der Beispiele vor und nach dem Sebumbeständigkeitstest

| Beispiel | Durchstoßfestigkeit, Testmethode H2, [N/304 mm$^2$] | Sebumbeständigkeitstest, Testmethode H3, [N/304 mm$^2$] |
|---|---|---|
| **B1** | 105 | 101 |
| **B2** | 102 | 94 |
| **B3** | 108 | 99 |
| **B4** | 67 | 59 |
| **B5** | 98 | 87 |
| **B6** | 117 | 105 |
| **B7** | 103 | 89 |
| **RB1** | 102 | 65 |
| **RB2** | 106 | 60 |
| **RB3** | 110 | 59 |
| **RB4** | 115 | 69 |

Der Tabelle 3 kann entnommen werden, dass alle erfindungsgemäßen Beispiele B1 bis B7 eine deutlich stabilere Sebumbeständigkeit aufweisen. So sinken die Durchstoßfestigkeiten maximal um 15 %. Dagegen zeigen die Referenzbeispiele RB1 bis RB4, dass die Durchstoßfestigkeit deutlich nach der Sebumeinwirkung abnimmt. Auch die Erhöhung des Getwertes auf 65 % für das Referenzbeispiel RB4 zeigt keinen positiven Effekt. Somit weisen die erfindungsgemäßen Beispiele einen deutlichen Vorteil gegenüber der bestehenden Technik auf.

**Patentansprüche**

1. Verfahren zur Verklebung von Substraten in elektronischen Konsumgüterartikeln, umfassend folgende Schritte:

    - Ausformung zumindest einer haftklebrigen Schicht aus einer Polyacrylat-Schmelze, die

        ■ zumindest eine epoxidgruppenhaltige Substanz als Vernetzer
        ■ und zumindest eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger

    enthält,
    - Bereitstellung einer doppelseitig klebrigen Klebefolie umfassend zumindest eine derartige haftklebrige Schicht,
    - Durchführung einer chemischen Vernetzungsreaktion der Haftklebemasse unterhalb der Schmelztemperatur des zu vernetzenden Polyacrylats,
    - Fixierung der zu verklebenden Substrate miteinander mittels der zumindest teilweise vernetzten Klebefolie,

2. Verfahren nach Anspruch 1, **dadurch gekennzeichnet, dass**
    die doppelseitig klebrige Klebefolie durch die haftklebrige Schicht an sich dargestellt ist.

3. Verfahren nach Anspruch 1, **dadurch gekennzeichnet, dass**
    die doppelseitig klebrige Klebefolie zwei außenliegende haftklebrige Schichten und mindestens eine zwischen diesen Schichten vorgesehene Trägerschicht umfasst.

4. Verfahren nach Anspruch 3, **dadurch gekennzeichnet, dass**
    beide außenliegenden haftklebrigen Schichten durch Ausformung jeweils einer Polyacrylat-Schmelze, die zumindest eine epoxidgruppenhaltige Substanz als Vernetzer und zumindest eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger enthält, erhalten werden.

**5.** Verwendung einer doppelseitig klebrigen Klebefolie umfassen zumindest eine haftklebrigen Schicht aus einer Polyacrylat-Schmelze, die

- zumindest eine epoxidgruppenhaltige Substanz als Vernetzer
- und zumindest eine bei einer Temperatur unterhalb der Schmelztemperatur des zu vernetzenden Polyacrylats für Vernetzungsreaktionen mittels epoxidgruppenhaltigen Verbindungen beschleunigend wirkende Substanz als Beschleuniger

enthält, zur Verklebung von Substraten in elektronischen Konsumgüterartikeln, **dadurch gekennzeichnet, dass** die Klebefolie eine Gesamtdicke von 200 μm nicht überschreitet.

**6.** Verwendung nach Anspruch 5, **dadurch gekennzeichnet, dass** die doppelseitig klebrige Klebefolie weiterhin zumindest eine Trägerschicht, basierend auf einer Polymerfolie oder einem Vlies mit einer Schichtdicke zwischen 4 μm und 100 μm, umfasst.

**7.** Verwendung nach einem der vorstehenden Ansprüche zur Verklebung in Mobiltelefonen.

**8.** Verwendung nach Anspruch 7, insbesondere zur Verklebung von Schutzscheiben und/oder Displays mit dem Mobiltelefongehäuse.

**Claims**

**1.** Method for bonding substrates in electronic consumer goods articles, comprising the following steps:

- shaping at least one pressure-sensitively adhesive layer from a polyacrylate melt which comprises

■ as crosslinker at least one substance containing epoxide groups
■ and, as accelerator, at least one substance which has an accelerating effect for crosslinking reactions by means of compounds containing epoxide groups, at a temperature below the melting temperature of the polyacrylate to be crosslinked,

- providing a double-sidedly adhesive sheet comprising at least one such pressure-sensitively adhesive layer,
- carrying out a chemical crosslinking reaction of the pressure-sensitive adhesive below the melting temperature of the polyacrylate to be crosslinked, and
- fixing the adherend substrates to one another by means of the at least partly crosslinked adhesive sheet.

**2.** Method according to Claim 1, **characterized in that** the double-sidedly adhesive sheet is represented by the pressure-sensitively adhesive layer itself.

**3.** Method according to Claim 1, **characterized in that** the double-sidedly adhesive sheet comprises two outer pressure-sensitively adhesive layers and at least one carrier layer provided between these layers.

**4.** Method according to Claim 3, **characterized in that** both outer pressure-sensitively adhesive layers are obtained by shaping in each case a polyacrylate melt which comprises as crosslinker at least one substance containing epoxide groups and, as accelerator, at least one substance which has an accelerating effect for crosslinking reactions by means of compounds containing epoxide groups, at a temperature below the melting temperature of the polyacrylate to be crosslinked.

**5.** Use of a double-sidedly adhesive sheet comprising at least one pressure-sensitively adhesive layer of a polyacrylate melt which comprises

- as crosslinker at least one substance containing epoxide groups
- and, as accelerator, at least one substance which has an accelerating effect for crosslinking reactions by means of compounds containing epoxide groups, at a temperature below the melting temperature of the polyacrylate to be crosslinked,

for bonding substrates in electronic consumer goods articles,
**characterized in that**
the adhesive sheet does not exceed an overall thickness of 200 μm.

6. Use according to Claim 5, **characterized in that**
the double-sidedly adhesive sheet further comprises at least one carrier layer based on a polymeric film or a nonwoven having a layer thickness between 4 μm and 100 μm.

7. Use according to any of the preceding claims for bonding in mobile phones.

8. Use according to Claim 7, more particularly for bonding protective screens and/or displays to the mobile phone casing.


**Revendications**

1. Procédé pour le collage de substrats dans des objets de consommation électroniques, comprenant les étapes suivantes :

   - formage d'au moins une couche autoadhésive en une masse fondue de polyacrylate qui contient

       - au moins une substance contenant des groupes époxyde comme réticulant
       - et au moins une substance agissant par accélération pour des réactions de réticulation au moyen de composés contenant des groupes époxyde à une température inférieure à la température de fusion du polyacrylate à réticuler comme accélérateur

   - préparation d'une feuille adhésive double face comprenant au moins une telle couche autoadhésive,
   - réalisation d'une réaction de réticulation chimique de la masse autoadhésive sous la température de fusion du polyacrylate à réticuler,
   - fixation des substrats à coller les uns sur les autres au moyen de la feuille adhésive au moins partiellement réticulée.

2. Procédé selon la revendication 1, **caractérisée en ce que** la feuille adhésive double face est réalisée par la couche autoadhésive en soi.

3. Procédé selon la revendication 1, **caractérisée en ce que** la feuille adhésive double face comprend deux couches autoadhésives externes et au moins une couche support prévue entre ces couches.

4. Procédé selon la revendication 3, **caractérisée en ce que** les deux couches autoadhésives externes sont obtenues par formage à chaque fois d'une masse fondue de polyacrylate, qui comprend au moins une substance contenant des groupes époxyde comme réticulant et au moins une substance agissant par accélération pour des réactions de réticulation au moyen de composés contenant des groupes époxyde à une température inférieure à la température de fusion du polyacrylate à réticuler comme accélérateur

5. Utilisation d'une feuille adhésive double face comprenant au moins une couche autoadhésive en une masse fondue de polyacrylate, contenant

       - au moins une substance contenant des groupes époxyde comme réticulant
       - et au moins une substance agissant par accélération pour des réactions de réticulation au moyen de composés contenant des groupes époxyde à une température inférieure à la température de fusion du polyacrylate à réticuler comme accélérateur

   pour le collage de substrats dans des objets de consommation électroniques, **caractérisée en ce que** l'épaisseur totale de la feuille adhésive ne dépasse pas 200 μm.

6. Utilisation selon la revendication 5, **caractérisée en ce que** la feuille adhésive double face comprend en outre au moins une couche support, à base d'une feuille polymère ou d'un non-tissé d'une épaisseur de couche entre 4 μm et 100 μm.

7. Utilisation selon l'une quelconque des revendications précédentes pour le collage dans des téléphones portables.

8. Utilisation selon la revendication 7, en particulier pour le collage d'écrans de protection et/ou d'affichages sur le boîtier de téléphones portables.

**Fig. 1**

**Fig. 2**

**Fig. 3**

**Fig. 4a**

**Fig. 4b**

**Fig. 5a**

**Fig. 5b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1978069 A
- US 6765078 B2
- US 6720399 B2
- EP 1311555 B1
- EP 0824111 A1
- EP 826698 A1
- EP 824110 A1

- EP 841346 A1
- EP 850957 A1
- US 5945491 A
- US 5854364 A
- US 5789487 A
- WO 2006027387 A1